# EUROPEAN PATENT APPLICATION

(11) **EP 4 417 075 A2**
(43) Date of publication of application: **21.08.2024**
(21) Application number: 24187426.2
(22) Date of filing: 02.03.2022
(51) Int. Cl.: A24F 40/50

(54) **POWER SUPPLY UNIT FOR AEROSOL GENERATION DEVICE**

(30) Priority: 10.05.2021 JP 2021079907
(62) Divisional of application: 22807102.3
(71) Applicant: Japan Tobacco Inc., Tokyo 105-6927 (JP)
(72) Inventor: Aoyama, Tatsunari, Tokyo, 130-8603 (JP); Kawanago, Hiroshi, Tokyo, 130-8603 (JP); Nagahama, Toru, Tokyo, 130-8603 (JP); Fujiki, Takashi, Tokyo, 130-8603 (JP); Yoshida, Ryo, Tokyo, 130-8603 (JP)
(74) Representative: Hoffmann Eitle

(57) **Abstract**

A non-combustion inhalation device (100), comprises: a heating unit (70) including a rod accommodation portion (172) being capable of accommodating a part of a rod (500) and a heater (HTR) for heating the rod (500) from an outer periphery; a chassis (150) defining an internal space of the non-combustion inhalation device (100) including a heating unit accommodation region (142) for accommodating the heating unit in an upper front portion, a board accommodating region (144) for accommodating a first board (161) and a second board (162) in a lower front portion and a power supply accommodation space (146) for accommodating the power supply (BAT) in a rear in an up-down direction. The first board (161) and the second board (162) are arranged parallel to each other in the board accommodation region.

## Description

### TECHNICAL FIELD

The present invention relates to a power supply unit for an aerosol generating device.

### BACKGROUND ART

Patent Literatures 1 and 2 describe a power supply unit for an aerosol generating device, the power supply unit being equipped with a voltage conversion IC that steps up and/or steps down a power. In the power supply unit for the aerosol generating device, a power supply voltage is converted by the voltage conversion IC and then supplied to a heater in order to improve an efficiency of aerosol generation.

To make the aerosol generating device have high functionality, the number of circuit boards and types of power supply voltages on the circuit boards increase in the power supply unit.

Therefore, for example, Patent Literature 3 describes a power supply unit for an aerosol generating device, the power supply unit including a first circuit board on which a charging terminal and a resistor are formed, and a second circuit board on which a charging IC, an MCU, and a switch are formed.

### CITATION LIST

### PATENT LITERATURE

Patent Literature 1: CN110547516A
Patent Literature 2: CN104664605A
Patent Literature 3: Japanese Patent No. 6573737

### SUMMARY OF INVENTION

### TECHNICAL PROBLEM

However, in a power supply unit, for an aerosol generating device, that includes a plurality of circuit boards, how to mount electronic components on the circuit boards has not been sufficiently studied.

The present invention provides a power supply unit for an aerosol generating device, the power supply unit including electronic components appropriately mounted on circuit boards.

### SOLUTION TO PROBLEM

A power supply unit for an aerosol generating device according to an aspect of the present invention includes: a power supply; a power supply connector to which the power supply is connected; a heater connector to which a heater configured to heat an aerosol source by consuming a power supplied from the power supply is connected; a controller configured to control a supply of a power from the power supply to the heater; a first circuit board on which an electronic component is mounted; a second circuit board on which an electronic component is mounted and which is separated from the first circuit board; and a step-up IC configured to step up a voltage supplied from the power supply and output the stepped-up voltage to the heater, in which the power supply connector and the step-up IC are not mounted on the second circuit board, but are mounted on the first circuit board.

### ADVANTAGEOUS EFFECTS OF INVENTION

According to the present invention, the electronic components are appropriately mounted on the circuit boards, and durability of the power supply unit for the aerosol generating device is improved.

### BRIEF DESCRIPTION OF DRAWINGS

[Fig. 1] Fig. 1 is a perspective view of a non-combustion inhalation device.
[Fig. 2] Fig. 2 is a perspective view of the non-combustion inhalation device with a rod mounted thereon.
[Fig. 3] Fig. 3 is another perspective view of the non-combustion inhalation device.
[Fig. 4] Fig. 4 is an exploded perspective view of the non-combustion inhalation device.
[Fig. 5] Fig. 5 is a perspective view of an internal unit of the non-combustion inhalation device.
[Fig. 6] Fig. 6 is an exploded perspective view of the internal unit in Fig. 5.
[Fig. 7] Fig. 7 is a perspective view of the internal unit without a power supply and a chassis.
[Fig. 8] Fig. 8 is another perspective view of the internal unit without the power supply and the chassis.
[Fig. 9] Fig. 9 is a cross-sectional view of a non-combustion inhalation device.
[Fig. 10] Fig. 10 is a schematic diagram illustrating operation modes of the inhalation device.
[Fig. 11] Fig. 11 is a diagram showing the schematic configuration of the electric circuit of the internal unit.
[Fig. 12] Fig. 12 is a diagram showing the schematic configuration of the electric circuit of the internal unit.
[Fig. 13] Fig. 13 is a diagram showing the schematic configuration of the electric circuit of the internal unit.
[Fig. 14] Fig. 14 is a diagram illustrating an operation of the electric circuit in a sleep mode.
[Fig. 15] Fig. 15 is a diagram illustrating an operation of the electric circuit in an active mode.
[Fig. 16] Fig. 16 is a diagram illustrating an operation of the electric circuit in a heating initial setting mode.
[Fig. 17] Fig. 17 is a diagram illustrating an operation of the electric circuit when a heater is heated in a heating mode.
[Fig. 18] Fig. 18 is a diagram illustrating an operation of the electric circuit when a temperature of the heater is detected in the heating mode.
[Fig. 19] Fig. 19 is a diagram illustrating an operation of the electric circuit in a charge mode.
[Fig. 20] Fig. 20 is a diagram illustrating an operation of the electric circuit when an MCU is reset (restarted).
[Fig. 21] Fig. 21 is a view showing a main surface of a receptacle mounting board.
[Fig. 22] Fig. 22 is a view showing a sub surface of the receptacle mounting board.
[Fig. 23] Fig. 23 is a view showing a main surface of an MCU mounting board.
[Fig. 24] Fig. 24 is a view showing a sub surface of the MCU mounting board.

### DESCRIPTION OF EMBODIMENTS

Hereinafter, an inhalation system which is an embodiment of an aerosol generating device according to the present invention will be described with reference to the drawings. The inhalation system includes a non-combustion inhalation device 100 (hereinafter, also simply referred to as the "inhalation device 100") which is an embodiment of a power supply unit of the present invention, and a rod 500 to be heated by the inhalation device 100. In the following description, a configuration in which the inhalation device 100 accommodates a heating unit in a non-detachable manner will be described as an example. However, the heating unit may be detachably attached to the inhalation device 100. For example, a component in which the rod 500 and the heating unit are integrated may be detachably attached to the inhalation device 100. That is, the power supply unit for the aerosol generating device may have a configuration that does not include the heating unit as a component. The term "non-detachable" refers to a configuration in which detachment cannot be performed as far as possible uses. Alternatively, an induction heating coil provided in the inhalation device 100 and a susceptor built in the rod 500 may cooperate to constitute the heating unit.

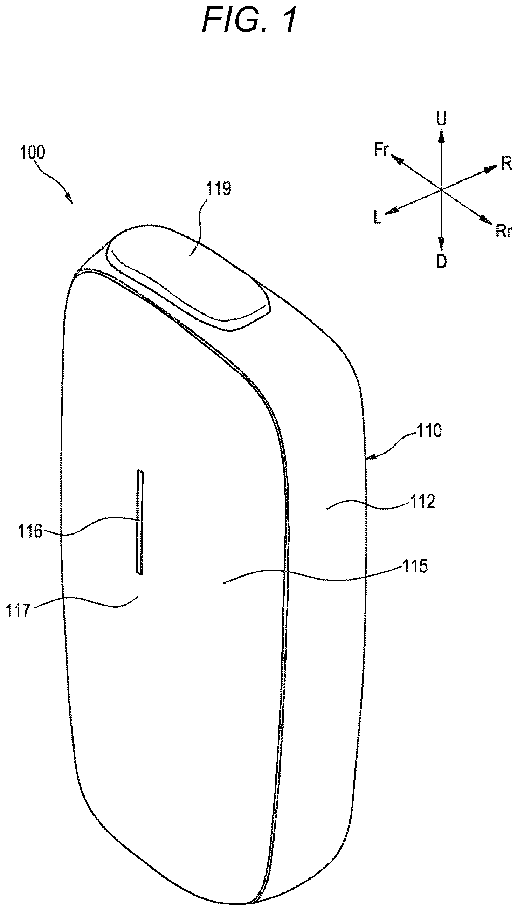

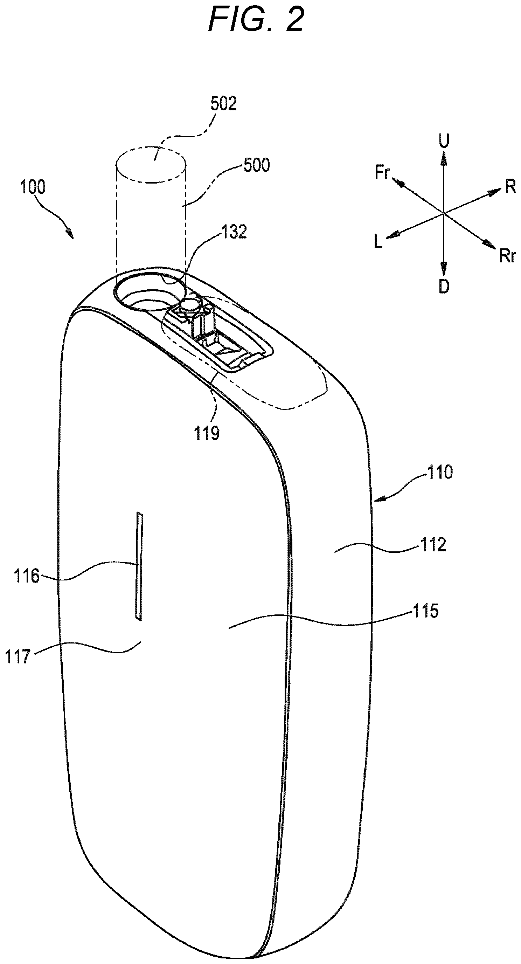

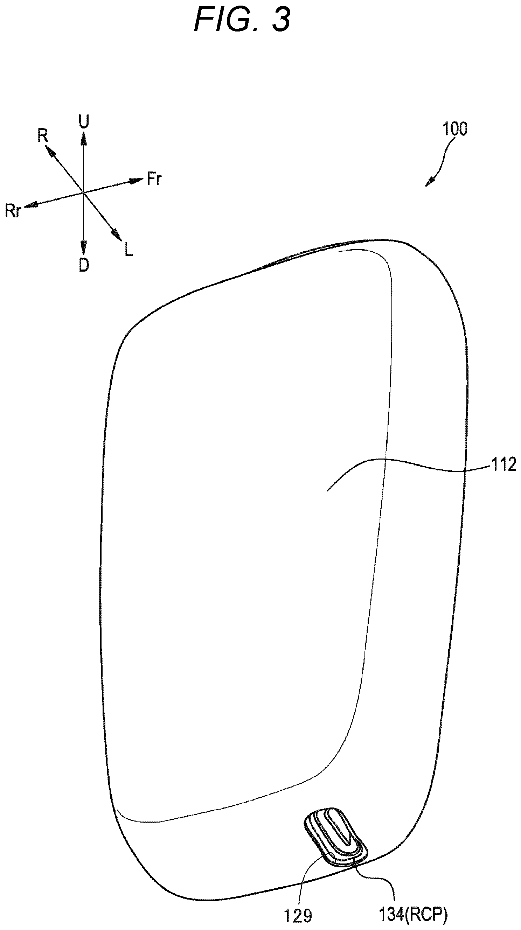

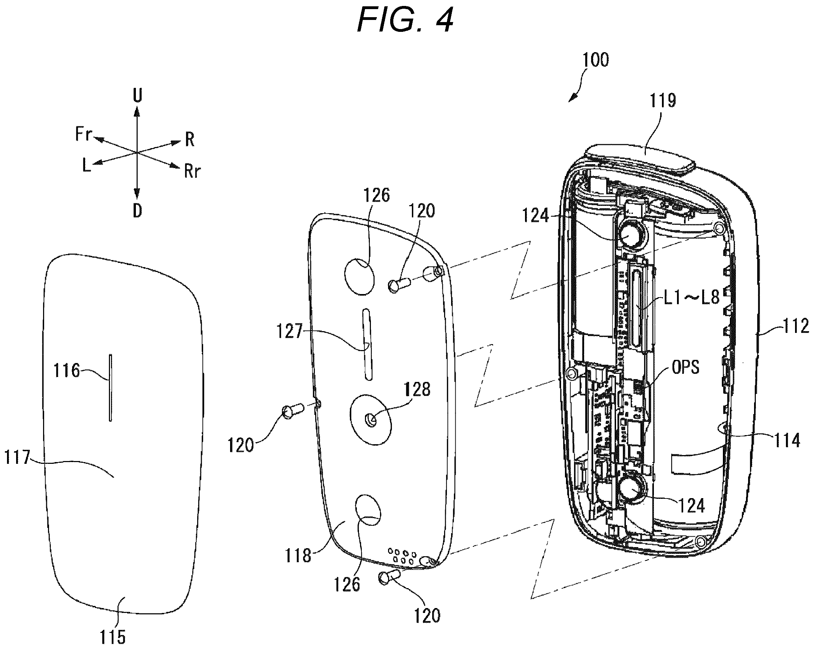

Fig. 1 is a perspective view showing an overall configuration of the inhalation device 100. Fig. 2 is a perspective view of the inhalation device 100 with the rod 500 mounted thereon. Fig. 3 is another perspective view of the inhalation device 100. Fig. 4 is an exploded perspective view of the inhalation device 100. In the following description, an orthogonal coordinate system of a three-dimensional space in which three directions orthogonal to each other are defined as a front-rear direction, a left-right direction, and an up-down direction is used for convenience. In the drawings, a front side is denoted by Fr, a rear side is denoted by Rr, a right side is denoted by R, a left side is denoted by L, an upper side is denoted by U, and a lower side is denoted by D.

The inhalation device 100 is configured to generate a flavor-containing aerosol by heating the elongated substantially cylindrical rod 500 (see Fig. 2) as an example of a flavor component-generating base material including a filler or the like containing an aerosol source and a flavor source.

### <Flavor Component-Generating Base Material (Rod)>

The rod 500 includes a filler containing an aerosol source that is heated at a predetermined temperature to generate an aerosol.

A type of the aerosol source is not particularly limited, and an extract substance from various natural products and/or a constituent component thereof may be selected according to the use. The aerosol source may be a solid, or may be a liquid, for example, a polyhydric alcohol such as glycerin or propylene glycol, or water. The aerosol source may contain a flavor source such as a cigarette raw material that effuses a flavor component by heating, or an extract derived from the cigarette raw material. A gas to which the flavor component is added is not limited to the aerosol, and for example, an invisible vapor may be generated.

The filler of the rod 500 may contain a cut tobacco as a flavor source. A material of the cut tobacco is not particularly limited, and a known material such as lamina or backbone may be used. The filler may contain one or two or more fragrances. A type of the fragrance is not particularly limited, and menthol is preferred from a viewpoint of imparting a good smoking taste. The flavor source may contain a plant other than tobacco (for example, mints, herbal medicines, or herbs). Depending on uses, the rod 500 may not include the flavor source.

### <Overall Configuration of Non-Combustion Inhalation Device>

Next, the overall configuration of the inhalation device 100 will be described with reference to Figs. 1 to 4.

The inhalation device 100 includes a substantially rectangular parallelepiped case 110 having a front surface, a rear surface, a left surface, a right surface, an upper surface, and a lower surface. The case 110 includes a bottomed cylindrical case main body 112 in which the front surface, the rear surface, the upper surface, the lower surface, and the right surface are integrally formed, an outer panel 115 and an inner panel 118 that seal an opening portion 114 (see Fig. 4) of the case main body 112 and form the left surface, and a slider 119.

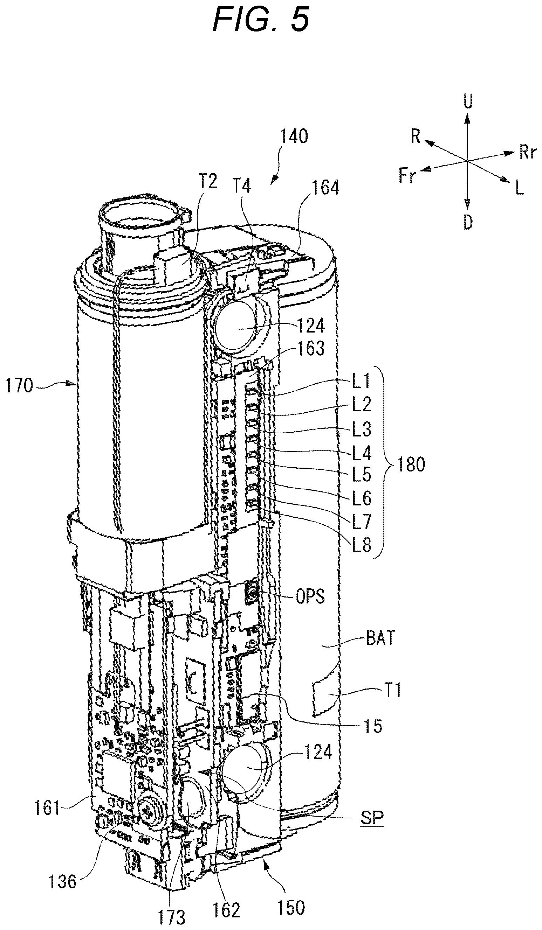

The inner panel 118 is fixed to the case main body 112 with bolts 120. The outer panel 115 is fixed to the case main body 112 so as to cover an outer surface of the inner panel 118, by using magnets 124 held by a chassis 150 (see Fig. 5) to be described later accommodated in the case main body 112. Since the outer panel 115 is fixed by the magnets 124, a user may replace the outer panel 115 as desired.

The inner panel 118 is provided with two through holes 126 through which the magnets 124 pass, respectively. The inner panel 118 is further provided with a vertically long hole 127 and a circular round hole 128 between the two through holes 126 that are arranged vertically. The long hole 127 is for transmitting light emitted from eight light emitting diodes (LEDs) L1 to L8 built in the case main body 112. Abutton-type operation switch OPS built in the case main body 112 passes through the round hole 128. That is, the operation switch OPS is disposed in the round hole 128 provided in the inner panel 118. Accordingly, the user may detect the light emitted from the eight LEDs L1 to L8 through an LED window 116 of the outer panel 115. In addition, the user may press down the operation switch OPS via a pressing unit 117 of the outer panel 115.

As shown in Fig. 2, an opening 132 into which the rod 500 may be inserted is provided on the upper surface of the case main body 112. The slider 119 is coupled to the case main body 112 in a manner as to be movable in a front-rear direction between a position (see Fig. 1) where the opening 132 is closed and a position (see Fig. 2) where the opening 132 is opened.

The operation switch OPS is used to perform various operations of the inhalation device 100. For example, the user operates the operation switch OPS via the pressing unit 117 in a state where the rod 500 is inserted into the opening 132 and mounted thereon as shown in Fig. 2. Accordingly, the rod 500 is heated by a heating unit 170 (see Fig. 5) without being burned. When the rod 500 is heated, an aerosol is generated from the aerosol source included in the rod 500, and a flavor of the flavor source included in the rod 500 is added to the aerosol. The user may inhale the flavor-containing aerosol by holding a mouthpiece 502 of the rod 500 protruding from the opening 132 and inhaling.

As shown in Fig. 3, a charging terminal 134 that is electrically connected to an external power supply such as an outlet or a mobile battery and receives a supply of a power is provided at the lower surface of the case main body 112. In the present embodiment, the charging terminal 134 is a universal serial bus (USB) Type-C receptacle, but is not limited thereto. The charging terminal 134 is hereinafter also referred to as a receptacle RCP. A long hole 129 that is long in a left-right direction and penetrates in an up-down direction is provided in the lower surface of the case main body 112, and the receptacle RCP is disposed in the long hole 129. A USB Type-C shaped plug may be inserted into and removed from the receptacle RCP through the long hole 129.

The charging terminal 134 may include, for example, a power receiving coil, and may be configured to receive a power transmitted from the external power supply in a wireless manner. A wireless power transfer method in this case may be an electromagnetic induction type, a magnetic resonance type, or a combination of the electromagnetic induction type and the magnetic resonance type. As another example, the charging terminal 134 may be connected to various USB terminals or the like, and may include the above power receiving coil.

The configuration of the inhalation device 100 shown in Figs. 1 to 4 is merely an example. The inhalation device 100 may be configured in various forms such that the rod 500 is held and an action such as heating is applied to generate a gas to which a flavor component is added from the rod 500, and the user may inhale the generated gas.

### <Internal Configuration of Non-Combustion Inhalation Device>

An internal unit 140 of the inhalation device 100 will be described with reference to Figs. 5 to 8.

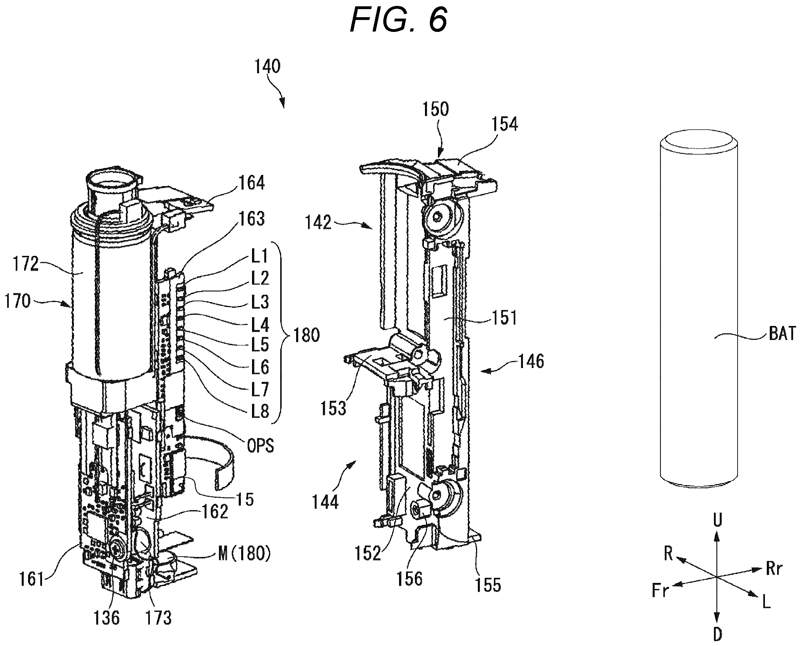

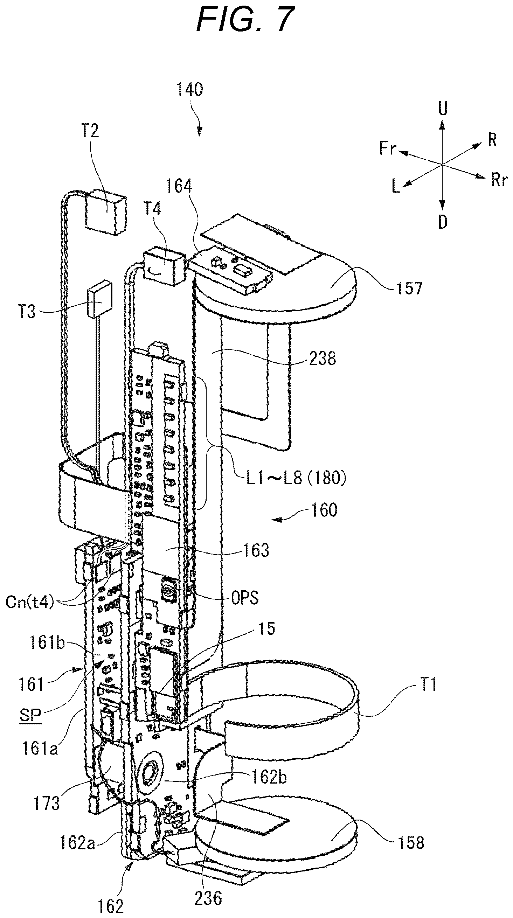

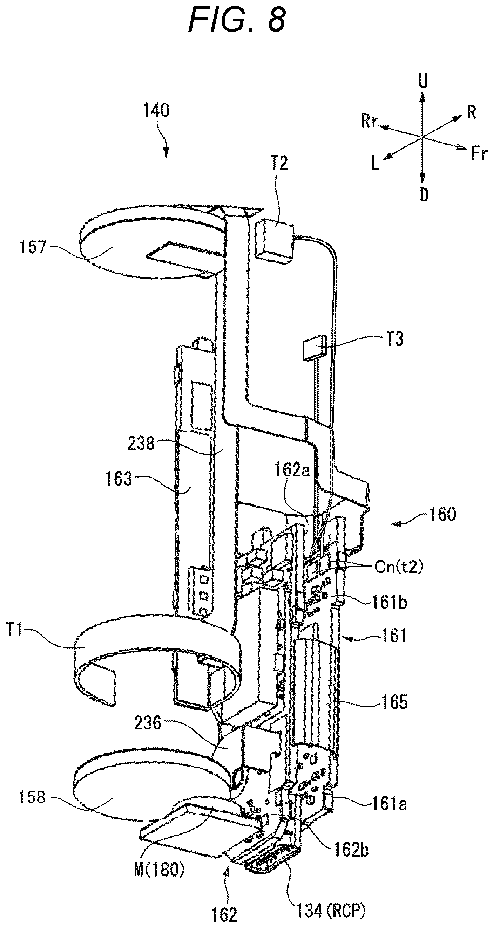

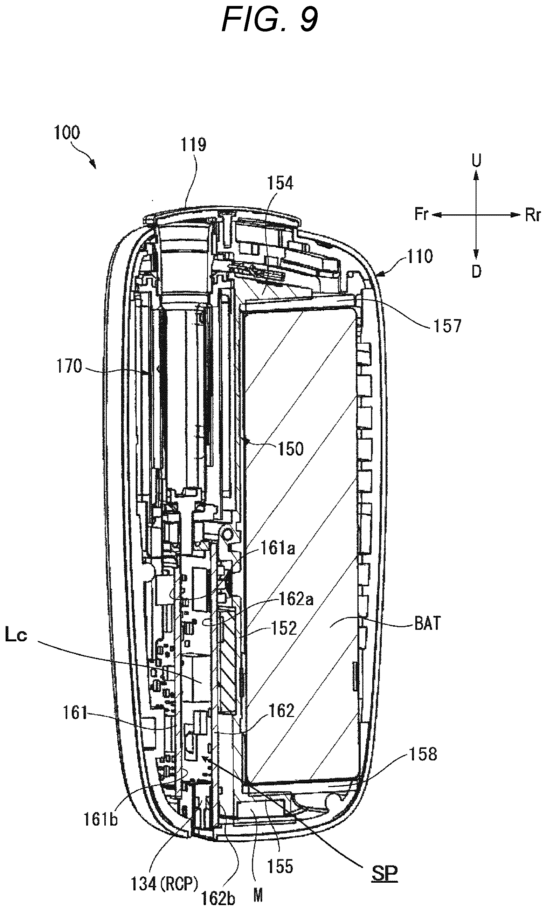

Fig. 5 is a perspective view of the internal unit 140 of the inhalation device 100. Fig. 6 is an exploded perspective view of the internal unit 140 in Fig. 5. Fig. 7 is a perspective view of the internal unit 140 without a power supply BAT and the chassis 150. Fig. 8 is another perspective view of the internal unit 140 without the power supply BAT and the chassis 150. Fig. 9 is a cross-sectional view of the inhalation device 100.

The internal unit 140 accommodated in an internal space of the case 110 includes the chassis 150, the power supply BAT, a circuit unit 160, the heating unit 170, a notification unit 180, and various sensors.

The chassis 150 is made of an insulating material, such as a resin, which has a property that does not allow heat to pass through easily. The chassis 150 includes a plate-shaped chassis main body 151 that is disposed substantially in a center of the internal space of the case 110 in the front-rear direction and extends in an up-down direction and the front-rear direction, a plate-shaped front-rear dividing wall 152 that is disposed substantially in the center of the internal space of the case 110 in the front-rear direction and extends in the up-down direction and a left-right direction, a plate-shaped up-down dividing wall 153 that extends forward from substantially a center of the front-rear dividing wall 152 in the up-down direction, a plate-shaped chassis upper wall 154 that extends rearward from upper edge portions of the front-rear dividing wall 152 and the chassis main body 151, and a plate-shaped chassis lower wall 155 that extends rearward from lower edge portions of the front-rear dividing wall 152 and the chassis main body 151. A left surface of the chassis main body 151 is covered with the inner panel 118 and the outer panel 115 of the case 110 described above.

The internal space of the case 110 is defined by the chassis 150 such that a heating unit accommodation region 142 is defined in an upper front portion, a board accommodation region 144 is defined in a lower front portion, and a power supply accommodation space 146 is defined in the rear in the up-down direction.

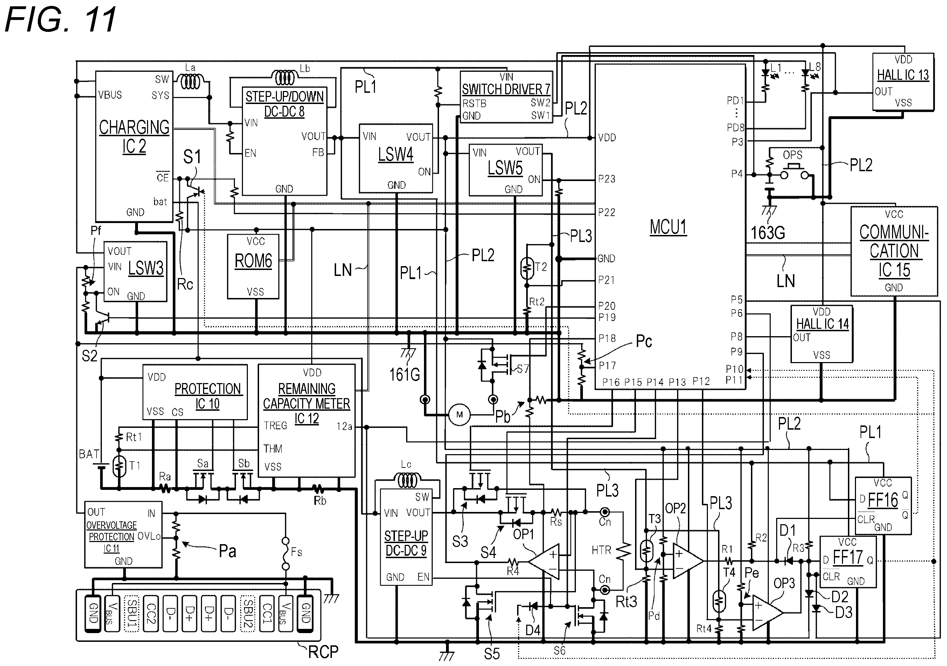

The heating unit 170 accommodated in the heating unit accommodation region 142 is constituted by a plurality of cylindrical members, and the cylindrical members are concentrically arranged to form a cylindrical body as a whole. The heating unit 170 includes a rod accommodation portion 172 capable of accommodating a part of the rod 500 therein, and a heater HTR (see Figs. 11 to 20) that heats the rod 500 from an outer periphery or a center. It is preferable that a surface of the rod accommodation portion 172 is heat-insulated against the heater HTR by forming the rod accommodation portion 172 with a heat insulating material or providing a heat insulating material inside the rod accommodation portion 172. The heater HTR may be an element capable of heating the rod 500. The heater HTR is, for example, a heating element. Examples of the heating element include a heating resistor, a ceramic heater, and an induction heating heater. As the heater HTR, for example, an element having a positive temperature coefficient (PTC) characteristic in which a resistance value increases with an increase in temperature is preferably used. Instead, the heater HTR having a negative temperature coefficient (NTC) characteristic in which the resistance value decreases with the increase in temperature may be used. The heating unit 170 has a function of defining a flow path of air supplied to the rod 500 and a function of heating the rod 500. The case 110 is formed with a vent (not shown) for allowing the air to flow in, and is configured to allow the air to flow into the heating unit 170.

The power supply BAT accommodated in the power supply accommodation space 146 is a rechargeable secondary battery, an electric double layer capacitor, or the like, and is preferably a lithium ion secondary battery. An electrolyte of the power supply BAT may be constituted by one or a combination of a gel electrolyte, an electrolytic solution, a solid electrolyte, and an ionic liquid. In the present embodiment, the power supply BAT has a cylindrical shape extending in the up-down direction.

The notification unit 180 performs a notification of various information such as a state of charge (SOC) indicating a state of charge of the power supply BAT, a preheating time at the time of inhalation, and an inhalation available period. The notification unit 180 of the present embodiment includes the eight LEDs L1 to L8 and a vibration motor M. The notification unit 180 may be constituted by light emitting elements such as the LEDs L1 to L8, vibration elements such as the vibration motor M, or audio output elements. The notification unit 180 may be a combination of two or more elements among the light emitting element, the vibration element, and the audio output element.

The various sensors include an intake sensor that detects a puff operation (an inhalation operation) of the user, a power supply temperature sensor that detects a temperature of the power supply BAT, a heater temperature sensor that detects a temperature of the heater HTR, a case temperature sensor that detects a temperature of the case 110, a cover position sensor that detects a position of the slider 119, a panel detection sensor that detects attachment and detachment of the outer panel 115, and the like.

The intake sensor is mainly constituted by, for example, a thermistor T2 disposed near the opening 132. The power supply temperature sensor is mainly constituted by, for example, a thermistor T1 disposed near the power supply BAT. The heater temperature sensor is mainly constituted by, for example, a thermistor T3 disposed near the heater HTR. As described above, the rod accommodation portion 172 is preferably heat-insulated from the heater HTR. In this case, the thermistor T3 is preferably in contact with or close to the heater HTR inside the rod accommodation portion 172. When the heater HTR has the PTC characteristic or the NTC characteristic, the heater HTR itself may be used as the heater temperature sensor. The case temperature sensor is mainly constituted by, for example, a thermistor T4 disposed near the left surface of the case 110. The cover position sensor is mainly constituted by a Hall IC 14 including a Hall element disposed near the slider 119. The panel detection sensor is mainly constituted by a Hall IC 13 including a Hall element disposed near an inner surface of the inner panel 118.

The circuit unit 160 includes four circuit boards, a plurality of integrate circuits (ICs), and a plurality of elements. The four circuit boards include a micro controller unit (MCU) mounting board 161 on which an MCU 1 and a charging IC 2 to be described later are mainly arranged, a receptacle mounting board 162 on which the charging terminal 134 is mainly disposed, an LED mounting board 163 on which a communication IC 15 to be described later, the operation switch OPS, and the LEDs L1 to L8 are arranged, and a Hall IC mounting board 164 on which the Hall IC 14 to be described later including the Hall element constituting the cover position sensor is disposed.

The MCU mounting board 161 and the receptacle mounting board 162 are arranged parallel to each other in the board accommodation region 144. Specifically, the MCU mounting board 161 and the receptacle mounting board 162 are arranged such that each of the element arrangement surfaces thereof extend in the left-right direction and the up-down direction, and the MCU mounting board 161 is disposed in front of the receptacle mounting board 162. Each of the MCU mounting board 161 and the receptacle mounting board 162 is provided with an opening portion. The MCU mounting board 161 and the receptacle mounting board 162 are fastened to a board fixing portion 156 of the front-rear dividing wall 152 by a bolt 136 in a state where a cylindrical spacer 173 is interposed between peripheral edge portions of the opening portions. That is, the spacer 173, together with the chassis 150, fixes positions of the MCU mounting board 161 and the receptacle mounting board 162 inside the case 110, and mechanically connects the MCU mounting board 161 and the receptacle mounting board 162. Accordingly, it is possible to prevent the MCU mounting board 161 and the receptacle mounting board 162 from coming into contact with each other and from generating a short-circuit current therebetween. The spacer 173 may have conductivity, and a ground of the MCU mounting board 161 and a ground of the receptacle mounting board 162 may be connected via the spacer 173.

For convenience, assuming that surfaces of the MCU mounting board 161 and the receptacle mounting board 162 facing the front are main surfaces 161a and 162a, respectively, and surfaces opposite to the main surfaces 161a and 162a are sub surfaces 161b and 162b, respectively, the main surface 161a of the MCU mounting board 161 faces the front surface of the case 110, and the sub surface 162b of the receptacle mounting board 162 faces the front-rear dividing wall 152 of the chassis 150. The sub surface 161b of the MCU mounting board 161 and the main surface 162a of the receptacle mounting board 162 face each other at a predetermined interval. A space SP sandwiched between the MCU mounting board 161 and the receptacle mounting board 162 is formed between the sub surface 161b of the MCU mounting board 161 and the main surface 162a of the receptacle mounting board 162.

The MCU mounting board 161 and the receptacle mounting board 162 are electrically connected via a flexible interconnect board 165.

The LED mounting board 163 is disposed on a left side surface of the chassis main body 151 and between the two magnets 124 arranged vertically. An element arrangement surface of the LED mounting board 163 is disposed along the up-down direction and the front-rear direction. In other words, the respective element arrangement surfaces of the MCU mounting board 161 and the receptacle mounting board 162 are orthogonal to the element arrangement surface of the LED mounting board 163. The respective element arrangement surfaces of the MCU mounting board 161 and the receptacle mounting board 162 and the element arrangement surface of the LED mounting board 163 are not limited to being orthogonal to each other, and preferably intersect with each other (non-parallel).

The vibration motor M constituting the notification unit 180 together with the LEDs L1 to L8 is supported on a lower surface of the chassis lower wall 155 and is electrically connected to the MCU mounting board 161 via a conductive wire. In this way, the vibration motor M is disposed side by side with the power supply BAT in the up-down direction in which the power supply BAT extends.

Accordingly, the vibration motor M and the power supply BAT may be arranged by effectively utilizing the internal space of the case 110 of the inhalation device 100, and thus the inhalation device 100 may be miniaturized.

An upper cushion member 157 is supported on a lower surface of the chassis upper wall 154, and a lower cushion member 158 is supported on an upper surface of the chassis lower wall 155. The upper cushion member 157 and the lower cushion member 158 are made of an elastic material such as rubber or foam. The upper cushion member 157 supports a contact surface with a negative electrode terminal of the power supply BAT on a negative electrode-side power supply bus bar 238, and the lower cushion member 158 supports a contact surface with a positive electrode terminal of the power supply BAT on a positive electrode-side power supply bus bar 236.

In a state where the power supply BAT is accommodated in the power supply accommodation space 146, the positive electrode terminal of the power supply BAT is brought into contact with the positive electrode-side power supply bus bar 236, and the negative electrode terminal of the power supply BAT is brought into contact with the negative electrode-side power supply bus bar 238. At this time, the upper cushion member 157 is disposed above the power supply BAT and the lower cushion member 158 is disposed below the power supply BAT, and thus when the inhalation device 100 receives an impact from the outside, the upper cushion member 157 and the lower cushion member 158 may reduce transmission of the impact to the power supply BAT and protect the power supply BAT.

Further, the vibration motor M is disposed on the lower surface of the chassis lower wall 155, the lower cushion member 158 is disposed on the upper surface of the chassis lower wall 155, and the power supply BAT is disposed above the lower cushion member 158. Therefore, the lower cushion member 158 is disposed between the power supply BAT and the vibration motor M in the up-down direction.

Accordingly, the lower cushion member 158 may prevent transmission of vibration of the vibration motor M to the power supply BAT, and may prevent the transmission of the vibration of the vibration motor M to other electronic components via the power supply BAT, thereby reducing an influence of the vibration of the vibration motor M on the power supply BAT and the circuit boards and realizing high functionality of the inhalation device 100 by the vibration motor M.

The Hall IC mounting board 164 is disposed on an upper surface of the chassis upper wall 154.

### <Operation Modes of Inhalation Device>

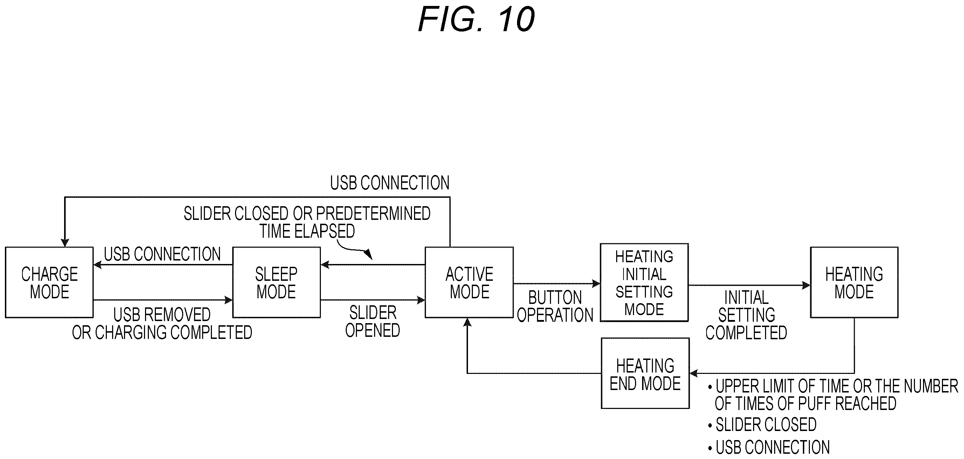

Fig. 10 is a schematic diagram illustrating operation modes of the inhalation device 100. As shown in Fig. 10, the operation modes of the inhalation device 100 include a charge mode, a sleep mode, an active mode, a heating initial setting mode, a heating mode, and a heating end mode.

The sleep mode is a mode for power saving by stopping a supply of a power mainly to electronic components required for heating control of the heater HTR.

The active mode is a mode in which most functions except the heating control of the heater HTR are enabled. When the slider 119 is opened while the inhalation device 100 is operating in the sleep mode, the operation mode is switched to the active mode. When the slider 119 is closed or a non-operating time of the operation switch OPS reaches a predetermined time while the inhalation device 100 is operating in the active mode, the operation mode is switched to the sleep mode.

The heating initial setting mode is a mode for performing initial setting of control parameters and the like for starting the heating control of the heater HTR. When an operation of the operation switch OPS is detected while the inhalation device 100 is operating in the active mode, the operation mode is switched to the heating initial setting mode. When the initial setting ends, the operation mode is switched to the heating mode.

The heating mode is a mode for performing the heating control of the heater HTR (heating control for aerosol generation and heating control for temperature detection). When the operation mode is switched to the heating mode, the inhalation device 100 starts the heating control of the heater HTR.

The heating end mode is a mode for executing an end process (a storage process of a heating history or the like) of the heating control of the heater HTR. While the inhalation device 100 is operating in the heating mode, when an energization time of the heater HTR or the number of times of inhalation by the user reaches an upper limit, or when the slider 119 is closed, the operation mode is switched to the heating end mode, and when the end process ends, the operation mode is switched to the active mode. When a USB connection is established while the inhalation device 100 is operating in the heating mode, the operation mode is switched to the heating end mode, and when the end process ends, the operation mode is switched to the charge mode. As shown in Fig. 10, in this case, the operation mode may be switched to the active mode before the operation mode is switched to the charge mode. In other words, when the USB connection is established while the inhalation device 100 is operating in the heating mode, the operation mode may be switched in the order of the heating end mode, the active mode, and the charge mode.

The charge mode is a mode in which the power supply BAT is charged by a power supplied from the external power supply connected to the receptacle RCP. When the external power supply is connected to the receptacle RCP (the USB connection) while the inhalation device 100 is operating in the sleep mode or the active mode, the operation mode is switched to the charge mode. While the inhalation device 100 is operating in the charge mode, when the charging of the power supply BAT is completed or the connection between the receptacle RCP and the external power supply is released, the operation mode is switched to the sleep mode.

### <Outline of Circuit of Internal Unit>

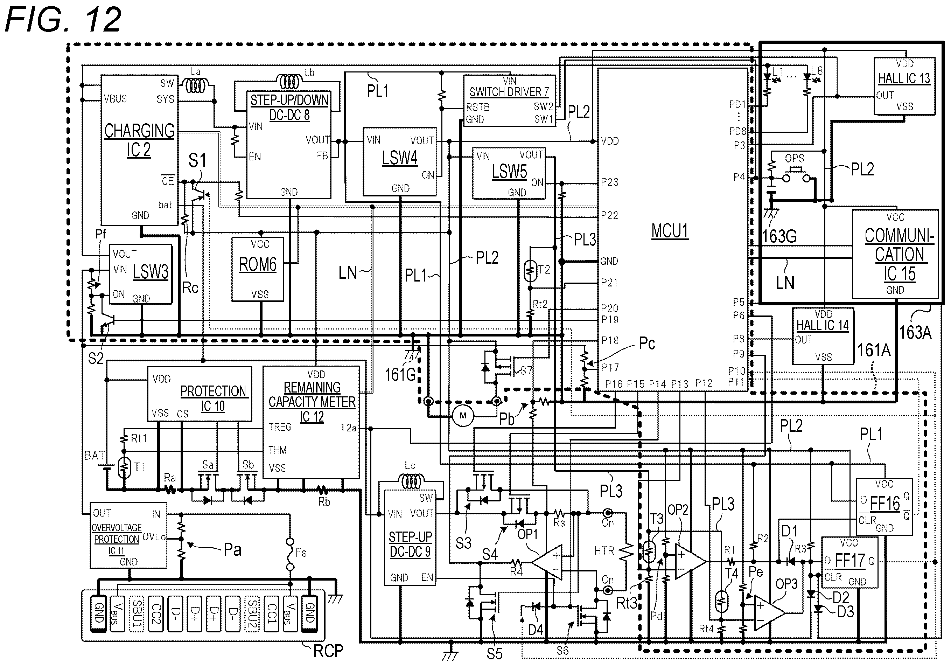

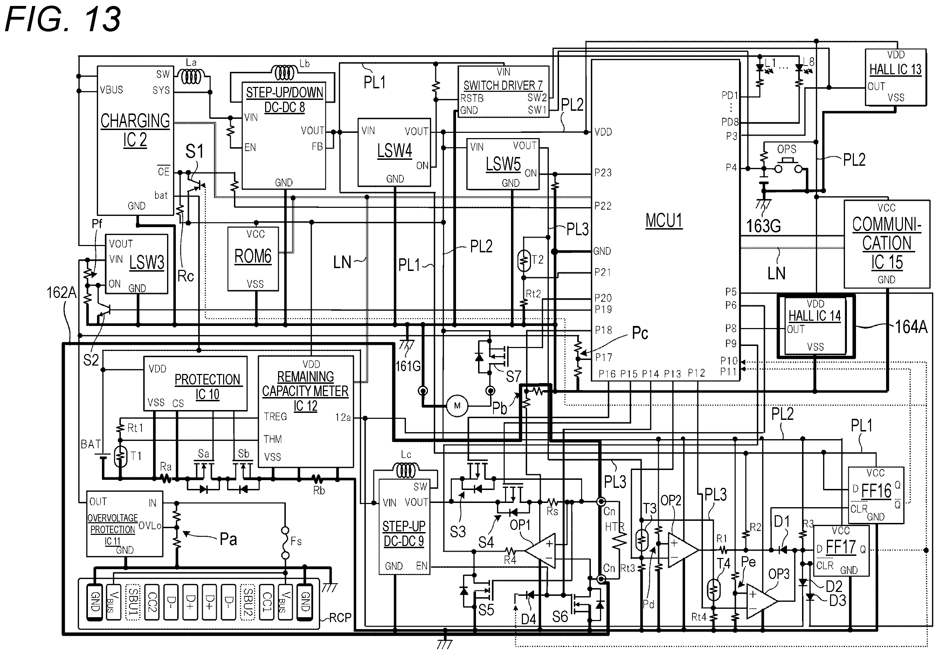

Figs. 11, 12, and 13 are diagrams showing a schematic configuration of an electric circuit of the internal unit 140. Fig. 12 is the same as Fig. 11 except that a range 161A (a range surrounded by a thick broken line) mounted on the MCU mounting board 161 and a range 163A (a range surrounded by a thick solid line) mounted on the LED mounting board 163 are added in the electric circuit shown in Fig. 11. Fig. 13 is the same as Fig. 11 except that a range 162A mounted on the receptacle mounting board 162 and a range 164A mounted on the Hall IC mounting board 164 are added in the electric circuit shown in Fig. 11.

An interconnect indicated by a thick solid line in Fig. 11 is an interconnect (an interconnect connected to the ground provided in the internal unit 140) having the same potential as a reference potential (a ground potential) of the internal unit 140, and the interconnect is hereinafter referred to as a ground line. In Fig. 11, each electronic component in which a plurality of circuit elements are chipped is indicated by a rectangle, and reference numerals of various terminals are shown inside the rectangle. Power supply terminals VCC and power supply terminals VDD mounted on chips indicate power supply terminals on a high potential side, respectively. Power supply terminals VSS and ground terminals GND mounted on the chips indicate power supply terminals on a low potential side (a reference potential side), respectively. In the chipped electronic component, a difference between a potential of the power supply terminal on the high potential side and a potential of the power supply terminal on the low potential side is a power supply voltage. The chipped electronic component performs various functions using the power supply voltage.

As shown in Fig. 12, the MCU mounting board 161 (the range 161A) is provided with, as main electronic components, the MCU 1 that performs overall control of the entire inhalation device 100, the charging IC 2 that performs charging control of the power supply BAT, load switches (hereinafter, referred to as LSWs) 3, 4, and 5 each constituted by combining a capacitor, a resistor, a transistor, and the like, a read only memory (ROM) 6, a switch driver 7, a step-up/down DC-DC converter 8 (shown as the step-up/down DC-DC 8 in the drawing), an operational amplifier OP2, an operational amplifier OP3, flip-flops (hereinafter, referred to as FFs) 16 and 17, connectors Cn(t2) electrically connected to the thermistor T2 constituting the intake sensor (the thermistor T2 connected to the connectors is shown in the drawing), connectors Cn(t3) electrically connected to the thermistor T3 constituting the heater temperature sensor (the thermistor T3 connected to the connectors is shown in the drawing), connectors Cn(t4) electrically connected to the thermistor T4 constituting the case temperature sensor (the thermistor T4 connected to the connectors is shown in the drawing), and a voltage dividing circuit Pc for USB connection detection.

The ground terminal GND of each of the charging IC 2, LSW 3, LSW 4, and LSW 5, the switch driver 7, the step-up/down DC-DC converter 8, the FF 16, and the FF 17 is connected to the ground line. The power supply terminal VSS of the ROM 6 is connected to the ground line. A negative power supply terminal of each of the operational amplifiers OP2 and OP3 is connected to the ground line.

As shown in Fig. 11, the LED mounting board 163 (the range 163A) is provided with the Hall IC 13 including the Hall element constituting the panel detection sensor, the LEDs L1 to L8, the operation switch OPS, and the communication IC 15 as main electronic components. The communication IC 15 is a communication module for communicating with an electronic device such as a smartphone. Each of the power supply terminal VSS of the Hall IC 13 and the ground terminal GND of the communication IC 15 is connected to the ground line. The communication IC 15 and the MCU 1 are configured to communicate with each other via a communication line LN. One end of the operation switch OPS is connected to a ground 163G provided inside the LED mounting board 163 via a ground line, and the other end of the operation switch OPS is connected to a terminal P4 of the MCU 1.

As shown in Fig. 13, the receptacle mounting board 162 (the range 162A) is provided with, as main electronic components, a power supply connector electrically connected to the power supply BAT (the power supply BAT connected to the power supply connector is shown in the drawing), a connector electrically connected to the thermistor T1 constituting the power supply temperature sensor (the thermistor T1 connected to this connector is shown in the drawing), a step-up DC-DC converter 9 (shown as the step-up DC-DC converter 9 in the drawing), a protection IC 10, an overvoltage protection IC 11, a remaining capacity meter IC 12, the receptacle RCP, switches S3 to S6 each constituted by a MOSFET, an operational amplifier OP1, and a pair of (that is, positive electrode side and negative electrode side) heater connectors Cn electrically connected to the heater HTR.

Each of the two ground terminals GND of the receptacle RCP, the ground terminal GND of the step-up DC-DC converter 9, the power supply terminal VSS of the protection IC 10, the power supply terminal VSS of the remaining capacity meter IC 12, the ground terminal GND of the overvoltage protection IC 11, and a negative power supply terminal of the operational amplifier OP1 is connected to the ground line.

As shown in Fig. 13, the Hall IC mounting board 164 (the range 164A) is provided with the Hall IC 14 including the Hall element constituting the cover position sensor. The power supply terminal VSS of the Hall IC 14 is connected to the ground line. An output terminal OUT of the Hall IC 14 is connected to a terminal P8 of the MCU 1. The MCU 1 detects the opening and closing of the slider 119 based on a signal input to the terminal P8.

As shown in Fig. 12, a connector electrically connected to the vibration motor M is provided on the MCU mounting board 161.

### <Details of Circuit of Internal Unit>

Hereinafter, a connection relationship or the like between the electronic components will be described with reference to Fig. 11.

Two power supply input terminals V_{BUS} of the receptacle RCP are each connected to an input terminal IN of the overvoltage protection IC 11 via a fuse Fs. When a USB plug is connected to the receptacle RCP, and a USB cable including the USB plug is connected to the external power supply, a USB voltage V_{USB} is supplied to the two power supply input terminals V_{BUS} of the receptacle RCP.

One end of a voltage dividing circuit Pa including a series circuit of two resistors is connected to the input terminal IN of the overvoltage protection IC 11. The other end of the voltage dividing circuit Pa is connected to the ground line. A connection point of the two resistors constituting the voltage dividing circuit Pa is connected to a voltage detection terminal OVLo of the overvoltage protection IC 11. In a state where a voltage input to the voltage detection terminal OVLo is less than a threshold, the overvoltage protection IC 11 outputs a voltage input to the input terminal IN from an output terminal OUT. When the voltage input to the voltage detection terminal OVLo is equal to or greater than the threshold (overvoltage), the overvoltage protection IC 11 stops the voltage output from the output terminal OUT (cuts off an electrical connection between the LSW 3 and the receptacle RCP) to protect the electronic components downstream of the overvoltage protection IC 11. The output terminal OUT of the overvoltage protection IC 11 is connected to an input terminal VIN of the LSW 3 and one end of the voltage dividing circuit Pc (a series circuit of two resistors) connected to the MCU 1. The other end of the voltage dividing circuit Pc is connected to the ground line. A connection point of the two resistors constituting the voltage dividing circuit Pc is connected to a terminal P17 of the MCU 1.

One end of a voltage dividing circuit Pf including a series circuit of two resistors is connected to the input terminal VIN of the LSW 3. The other end of the voltage dividing circuit Pf is connected to the ground line. A connection point of the two resistors constituting the voltage dividing circuit Pf is connected to a control terminal ON of the LSW 3. A collector terminal of a bipolar transistor S2 is connected to the control terminal ON of the LSW 3. An emitter terminal of the bipolar transistor S2 is connected to the ground line. A base terminal of the bipolar transistor S2 is connected to a terminal P19 of the MCU 1. When a signal input to the control terminal ON is at a high level, the LSW 3 outputs a voltage input to the input terminal VIN from an output terminal VOUT. The output terminal VOUT of the LSW 3 is connected to an input terminal VBUS of the charging IC 2.

The MCU 1 turns on the bipolar transistor S2 while the USB connection is not established. Accordingly, the control terminal ON of the LSW 3 is connected to the ground line via the bipolar transistor S2, and thus a low-level signal is input to the control terminal ON of the LSW 3.

The bipolar transistor S2 connected to the LSW 3 is turned off by the MCU 1 when the USB connection is established. By turning off the bipolar transistor S2, the USB voltage V_{USB} divided by the voltage dividing circuit Pf is input to the control terminal ON of the LSW 3. Therefore, when the USB connection is established and the bipolar transistor S2 is turned off, a high-level signal is input to the control terminal ON of the LSW 3. Accordingly, the LSW 3 outputs the USB voltage V_{USB} supplied from the USB cable from the output terminal VOUT. Even if the USB connection is established in a state where the bipolar transistor S2 is not turned off, the control terminal ON of the LSW 3 is connected to the ground line via the bipolar transistor S2. Therefore, it should be noted that the low-level signal is continuously input to the control terminal ON of the LSW 3 unless the MCU 1 turns off the bipolar transistor S2.

A positive electrode terminal of the power supply BAT is connected to the power supply terminal VDD of the protection IC 10, an input terminal VIN of the step-up DC-DC converter 9, and a charging terminal bat of the charging IC 2. Therefore, a power supply voltage V_{BAT} of the power supply BAT is supplied to the protection IC 10, the charging IC 2, and the step-up DC-DC converter 9.

A resistor Ra, a switch Sa constituted by a MOSFET, a switch Sb constituted by a MOSFET, and a resistor Rb are connected in series to a negative electrode terminal of the power supply BAT in this order. A current detection terminal CS of the protection IC 10 is connected to a connection point of the resistor Ra and the switch Sa. Control terminals of the switch Sa and the switch Sb are connected to the protection IC 10. Both ends of the resistor Rb are connected to the remaining capacity meter IC 12.

The protection IC 10 acquires, based on a voltage input to the current detection terminal CS (a voltage applied to both ends of the resistor Ra), a current value flowing through the resistor Ra during charging and discharging of the power supply BAT, and performs, when the current value is excessive (overcurrent), opening and closing control of the switch Sa and the switch Sb to stop the charging or the discharging of the power supply BAT, thereby protecting the power supply BAT.

A resistor Rt1 is connected to the connector connected to the thermistor T1 disposed near the power supply BAT. A series circuit of the resistor Rt1 and the thermistor T1 is connected to the ground line and a regulator terminal TREG of the remaining capacity meter IC 12. A connection point of the thermistor T1 and the resistor Rt1 is connected to a thermistor terminal THM of the remaining capacity meter IC 12. The thermistor T1 may be a positive temperature coefficient (PTC) thermistor whose resistance value increases with an increase in temperature, or may be a negative temperature coefficient (NTC) thermistor whose resistance value decreases with the increase in temperature.

The remaining capacity meter IC 12 detects a current flowing through the resistor Rb, and derives, based on the detected current value, battery information such as a remaining capacity , a state of charge (SOC) indicating the charging state, and a state of health (SOH) indicating the health state of the power supply BAT. The remaining capacity meter IC 12 supplies a voltage from a built-in regulator connected to the regulator terminal TREG to a voltage dividing circuit constituted by the thermistor T1 and the resistor Rt1. The remaining capacity meter IC 12 acquires a voltage divided by the voltage dividing circuit from the thermistor terminal THM, and acquires temperature information related to the temperature of the power supply BAT based on this voltage. The remaining capacity meter IC 12 is connected to the MCU 1 via the communication line LN for serial communication, and is configured to communicate with the MCU 1. The remaining capacity meter IC 12 transmits the derived battery information and the acquired temperature information of the power supply BAT to the MCU 1 in response to a request from the MCU 1. The MCU 1 controls the discharging from the power supply BAT to the heater HTR based on a remaining capacity of the power supply BAT acquired by the remaining capacity meter IC 12. That is, when the remaining capacity of the power supply BAT is equal to or less than a predetermined value, the MCU 1 performs a display for prohibiting the discharging to the heater HTR and prompting the charging. In order to perform the serial communication, a plurality of signal lines such as a data line for data transmission and a clock line for synchronization are required. It should be noted that only one signal line is shown in Figs. 11 to 20for simplification.

The remaining capacity meter IC 12 includes a notification terminal 12a. The notification terminal 12a is connected to a terminal P6 of the MCU 1 and a cathode of a diode D2 to be described later. When the remaining capacity meter IC 12 detects an abnormality such as an excessive temperature of the power supply BAT, the remaining capacity meter IC 12 outputs a low-level signal from the notification terminal 12a to notify the MCU 1 of occurrence of the abnormality. The low-level signal is also input to a CLRC) terminal of the FF 17 via the diode D2.

One end of a reactor Lc is connected to a switching terminal SW of the step-up DC-DC converter 9. The other end of the reactor Lc is connected to the input terminal VIN of the step-up DC-DC converter 9. The step-up DC-DC converter 9 performs on/off control of a built-in transistor connected to the switching terminal SW, thereby performing voltage conversion control of stepping up the input voltage and outputting the stepped-up voltage from an output terminal VOUT. The input terminal VIN of the step-up DC-DC converter 9 is connected to the power supply BAT and constitutes a power supply terminal on a high potential side of the step-up DC-DC converter 9. The step-up DC-DC converter 9 performs a step-up operation when a signal input to an enable terminal EN is at a high level. While the USB connection is established, the signal input to the enable terminal EN of the step-up DC-DC converter 9 may be controlled to a low level by the MCU 1. Alternatively, while the USB connection is established, the MCU 1 may not control the signal input to the enable terminal EN of the step-up DC-DC converter 9 to make a potential of the enable terminal EN unstable.

A source terminal of the switch S4 constituted by a P-channel MOSFET is connected to the output terminal VOUT of the step-up DC-DC converter 9. A gate terminal of the switch S4 is connected to a terminal P15 of the MCU 1. One end of a resistor Rs is connected to a drain terminal of the switch S4. The other end of the resistor Rs is connected to the heater connector Cn on the positive electrode side connected to one end of the heater HTR. A voltage dividing circuit Pb including two resistors is connected to a connection point of the switch S4 and the resistor Rs. A connection point of the two resistors constituting the voltage dividing circuit Pb is connected to a terminal P18 of the MCU 1. The connection point of the switch S4 and the resistor Rs is further connected to a positive power supply terminal of the operational amplifier OP1.

A connection line between the output terminal VOUT of the step-up DC-DC converter 9 and the source terminal of the switch S4 is connected to a source terminal of the switch S3 constituted by a P-channel MOSFET. A gate terminal of the switch S3 is connected to a terminal P16 of the MCU 1. A drain terminal of the switch S3 is connected to a connection line between the resistor Rs and the heater connector Cn on the positive electrode side. As described above, a circuit including the switch S3 and a circuit including the switch S4 and the resistor Rs are connected in parallel between the output terminal VOUT of the step-up DC-DC converter 9 and the positive electrode side of the heater connector Cn. The circuit including the switch S3 does not include a resistor, and thus is a circuit having a resistance lower than that of the circuit including the switch S4 and the resistor Rs.

A non-inverting input terminal of the operational amplifier OP1 is connected to the connection line between the resistor Rs and the heater connector Cn on the positive electrode side. An inverting input terminal of the operational amplifier OP1 is connected to the heater connector Cn on the negative electrode side connected to the other end of the heater HTR, and a drain terminal of the switch S6 constituted by an N-channel MOSFET. A source terminal of the switch S6 is connected to the ground line. A gate terminal of the switch S6 is connected to a terminal P14 of the MCU 1, an anode of a diode D4, and the enable terminal EN of the step-up DC-DC converter 9. A cathode of the diode D4 is connected to a Q terminal of the FF 17. One end of a resistor R4 is connected to an output terminal of the operational amplifier OP1. The other end of the resistor R4 is connected to a terminal P9 of the MCU 1 and a drain terminal of the switch S5 constituted by an N-channel MOSFET. A source terminal of the switch S5 is connected to the ground line. A gate terminal of the switch S5 is connected to the connection line between the resistor Rs and the heater connector Cn on the positive electrode side.

The input terminal VBUS of the charging IC 2 is connected to an anode of each of the LEDs L1 to L8. That is, the LEDs L1 to L8 are connected in parallel to the input terminal VBUS. Cathodes of the LEDs L1 to L8 are connected to control terminals PD1 to PD8 of the MCU 1 via resistors for current limitation, respectively. The MCU 1 includes a built-in transistor (a built-in switch) connected to each of the control terminals PD1 to PD8 and the ground terminal GND.

Therefore, the LEDs L1 to L8 are configured to operate by the USB voltage V_{USB} supplied from the USB cable connected to the receptacle RCP and a voltage supplied from the power supply BAT via the charging IC 2, respectively.

Further, the MCU 1 turns on the built-in switch connected to the control terminal PD 1 to energize the LED L1 to turn on the LED L1, and turns off the built-in switch connected to the control terminal PD1 to turn off the LED L1. By switching on and off the built-in switch connected to the control terminal PD1 at a high speed, a luminance and a light emission pattern of the LED L1 may be dynamically controlled. Similarly, the LEDs L2 to L8 are controlled to be turned on by the MCU 1.

The charging IC 2 has a charging function of charging the power supply BAT based on the USB voltage V_{USB} input to the input terminal VBUS. The charging IC 2 acquires a charging current or a charging voltage of the power supply BAT from a terminal or an interconnect (not shown), and performs the charging control of the power supply BAT (control of a supply of a power from the charging terminal bat to the power supply BAT) based on the charging current or the charging voltage. The charging IC 2 may acquire the temperature information of the power supply BAT transmitted from the remaining capacity meter IC 12 to the MCU 1 from the MCU 1 through the serial communication using the communication line LN and use the temperature information for the charging control.

The charging IC 2 further has a V_{BAT} power path function and an OTG function. The V_{BAT} power path function is a function of outputting, from an output terminal SYS, a system power supply voltage VccO that is substantially equal to the power supply voltage V_{BAT} input to the charging terminal bat. The OTG function is a function of outputting, from the input terminal VBUS, a system power supply voltage Vcc4 obtained by stepping up the power supply voltage V_{BAT} input to the charging terminal bat. The MCU 1 controls on and off of the OTG function of the charging IC 2 through the serial communication using the communication line LN. In the OTG function, the power supply voltage V_{BAT} input to the charging terminal bat may be output as it is from the input terminal VBUS. In this case, the power supply voltage V_{BAT} and the system power supply voltage Vcc4 are substantially equal to each other.

The output terminal SYS of the charging IC 2 is connected to an input terminal VIN of the step-up/down DC-DC converter 8. One end of a reactor La is connected to a switching terminal SW of the charging IC 2. The other end of the reactor La is connected to the output terminal SYS of the charging IC 2. A charge enable terminal CE(⁻) of the charging IC 2 is connected to a terminal P22 of the MCU 1 via a resistor. Further, a collector terminal of a bipolar transistor S1 is connected to the charge enable terminal CE(⁻) of the charging IC 2. An emitter terminal of the bipolar transistor S1 is connected to an output terminal VOUT of the LSW 4 to be described later. A base terminal of the bipolar transistor S1 is connected to the Q terminal of the FF 17. Further, one end of a resistor Rc is connected to the charge enable terminal CE(⁻) of the charging IC 2. The other end of the resistor Rc is connected to the output terminal VOUT of the LSW 4.

A resistor is connected to the input terminal VIN and an enable terminal EN of the step-up/down DC-DC converter 8. By inputting the system power supply voltage VccO from the output terminal SYS of the charging IC 2 to the input terminal VIN of the step-up/down DC-DC converter 8, a signal input to the enable terminal EN of the step-up/down DC-DC converter 8 is at a high level, and the step-up/down DC-DC converter 8 starts a step-up operation or a step-down operation. By switching control of a built-in transistor connected to a reactor Lb, the step-up/down DC-DC converter 8 steps up or steps down the system power supply voltage VccO input to the input terminal VIN to generate a system power supply voltage Vcc1, and outputs the system power supply voltage Vcc1 from an output terminal VOUT. The output terminal VOUT of the step-up/down DC-DC converter 8 is connected to a feedback terminal FB of the step-up/down DC-DC converter 8, an input terminal VIN of the LSW 4, an input terminal VIN of the switch driver 7, and the power supply terminal VCC and a D terminal of the FF 16. An interconnect to which the system power supply voltage Vcc1 output from the output terminal VOUT of the step-up/down DC-DC converter 8 is supplied is referred to as a power supply line PL1.

When a signal input to a control terminal ON is at a high level, the LSW 4 outputs, from the output terminal VOUT, the system power supply voltage Vcc1 input to the input terminal VIN. The control terminal ON of the LSW 4 and the power supply line PL 1 are connected via a resistor. Therefore, by supplying the system power supply voltage Vcc1 to the power supply line PL1, a high-level signal is input to the control terminal ON of the LSW 4. A voltage output from LSW 4 is the same as the system power supply voltage Vcc1 if an interconnect resistance or the like is ignored. However, the voltage output from the output terminal VOUT of LSW 4 is hereinafter referred to as a system power supply voltage Vcc2 in order to distinguish from the system power supply voltage Vcc1.

The output terminal VOUT of the LSW 4 is connected to the power supply terminal VDD of the MCU 1, an input terminal VIN of the LSW 5, the power supply terminal VDD of the remaining capacity meter IC 12, the power supply terminal VCC of the ROM 6, the emitter terminal of the bipolar transistor S1, the resistor Rc, and the power supply terminal VCC of the FF 17. An interconnect to which the system power supply voltage Vcc2 output from the output terminal VOUT of the LSW 4 is supplied is referred to as a power supply line PL2.

When a signal input to a control terminal ON is at a high level, the LSW 5 outputs, from an output terminal VOUT, the system power supply voltage Vcc2 input to the input terminal VIN. The control terminal ON of the LSW 5 is connected to a terminal P23 of the MCU 1. A voltage output from LSW 5 is the same as the system power supply voltage Vcc2 if an interconnect resistance or the like is ignored. However, the voltage output from the output terminal VOUT of LSW 5 is hereinafter referred to as a system power supply voltage Vcc3 in order to distinguish from the system power supply voltage Vcc2. An interconnect to which the system power supply voltage Vcc3 output from the output terminal VOUT of the LSW 5 is supplied is referred to as a power supply line PL3.

A series circuit of the thermistor T2 and a resistor Rt2 is connected to the power supply line PL3, and the resistor Rt2 is connected to the ground line. The thermistor T2 and the resistor Rt2 constitute a voltage dividing circuit, and a connection point thereof is connected to a terminal P21 of the MCU 1. The MCU 1 detects temperature variation (resistance value variation) of the thermistor T2 based on a voltage input to the terminal P21, and determines the presence or absence of a puff operation based on a temperature variation amount.

A series circuit of the thermistor T3 and a resistor Rt3 is connected to the power supply line PL3, and the resistor Rt3 is connected to the ground line. The thermistor T3 and the resistor Rt3 constitute a voltage dividing circuit, and a connection point thereof is connected to a terminal P13 of the MCU 1 and an inverting input terminal of the operational amplifier OP2. The MCU 1 detects a temperature of the thermistor T3 (corresponding to the temperature of the heater HTR) based on a voltage input to the terminal P13.

A series circuit of the thermistor T4 and a resistor Rt4 is connected to the power supply line PL3, and the resistor Rt4 is connected to the ground line. The thermistor T4 and the resistor Rt4 constitute a voltage dividing circuit, and a connection point thereof is connected to a terminal P12 of the MCU 1 and an inverting input terminal of the operational amplifier OP3. The MCU 1 detects a temperature of the thermistor T4 (corresponding to the temperature of the case 110) based on a voltage input to the terminal P12.

A source terminal of a switch S7 constituted by a MOSFET is connected to the power supply line PL2. A gate terminal of the switch S7 is connected to a terminal P20 of the MCU 1. A drain terminal of the switch S7 is connected to one of a pair of connectors to which the vibration motor M is connected. The other of the pair of connectors is connected to the ground line. The MCU 1 may control opening and closing of the switch S7 by operating a potential of the terminal P20 to vibrate the vibration motor M in a specific pattern. A dedicated driver IC may be used instead of the switch S7.

A positive power supply terminal of the operational amplifier OP2 and a voltage dividing circuit Pd (a series circuit of two resistors) connected to a non-inverting input terminal of the operational amplifier OP2 are connected to the power supply line PL2. A connection point of the two resistors constituting the voltage dividing circuit Pd is connected to the non-inverting input terminal of the operational amplifier OP2. The operational amplifier OP2 outputs a signal corresponding to the temperature of the heater HTR (a signal corresponding to a resistance value of the thermistor T3). In the present embodiment, since a thermistor having the NTC characteristic is used as the thermistor T3, an output voltage of the operational amplifier OP2 decreases as the temperature of the heater HTR (the temperature of the thermistor T3) increases. This is because the negative power supply terminal of the operational amplifier OP2 is connected to the ground line, and a value of the output voltage of the operational amplifier OP2 is substantially equal to a value of the ground potential when a voltage value (a divided voltage value obtained by the thermistor T3 and the resistor Rt3) input to the inverting input terminal of the operational amplifier OP2 is higher than a voltage value (a divided voltage value obtained by the voltage dividing circuit Pd) input to the non-inverting input terminal of the operational amplifier OP2. That is, when the temperature of the heater HTR (the temperature of the thermistor T3) is high, the output voltage of the operational amplifier OP2 is at a low level.

When a thermistor having the PTC characteristic is used as the thermistor T3, an output of the voltage dividing circuit constituted by the thermistor T3 and the resistor Rt3 may be connected to the non-inverting input terminal of the operational amplifier OP2, and an output of the voltage dividing circuit Pd may be connected to the inverting input terminal of the operational amplifier OP2.

A positive power supply terminal of the operational amplifier OP3 and a voltage dividing circuit Pe (a series circuit of two resistors) connected to a non-inverting input terminal of the operational amplifier OP3 are connected to the power supply line PL2. A connection point of the two resistors constituting the voltage dividing circuit Pe is connected to the non-inverting input terminal of the operational amplifier OP3. The operational amplifier OP3 outputs a signal corresponding to the temperature of the case 110 (a signal corresponding to a resistance value of the thermistor T4). In the present embodiment, since a thermistor having the NTC characteristic is used as the thermistor T4, an output voltage of the operational amplifier OP3 decreases as the temperature of the case 110 increases. This is because the negative power supply terminal of the operational amplifier OP3 is connected to the ground line, and a value of the output voltage of the operational amplifier OP3 is substantially equal to the value of the ground potential when a voltage value (a divided voltage value obtained by the thermistor T4 and the resistor Rt4) input to the inverting input terminal of the operational amplifier OP3 is higher than a voltage value (a divided voltage value obtained by the voltage dividing circuit Pe) input to the non-inverting input terminal of the operational amplifier OP3. That is, when the temperature of the thermistor T4 is high, the output voltage of the operational amplifier OP3 is at a low level.

When a thermistor having the PTC characteristic is used as the thermistor T4, an output of the voltage dividing circuit constituted by the thermistor T4 and the resistor Rt4 may be connected to the non-inverting input terminal of the operational amplifier OP3, and an output of the voltage dividing circuit Pe may be connected to the inverting input terminal of the operational amplifier OP3.

A resistor R1 is connected to an output terminal of the operational amplifier OP2. A cathode of a diode D1 is connected to the resistor R1. An anode of the diode D1 is connected to an output terminal of the operational amplifier OP3, a D terminal of the FF 17, and the CLRC) terminal of the FF 17. A resistor R2 connected to the power supply line PL1 is connected to a connection line between the resistor R1 and the diode D1. A CLRC) terminal of the FF 16 is connected to the connection line.

One end of a resistor R3 is connected to a connection line between the D terminal of the FF 17 and a connection point of the anode of the diode D1 and the output terminal of the operational amplifier OP3. The other end of the resistor R3 is connected to the power supply line PL2. Further, an anode of the diode D2 connected to the notification terminal 12a of the remaining capacity meter IC 12, an anode of a diode D3, and the CLR(⁻) terminal of the FF 17 are connected to the connection line. A cathode of the diode D3 is connected to a terminal P5 of the MCU 1.

When the temperature of the heater HTR is excessive, the signal output from the operational amplifier OP2 is small, and a signal input to the CLRC) terminal is at a low level, the FF 16 inputs a high-level signal from a Q(⁻) terminal to a terminal P11 of the MCU 1. The high-level system power supply voltage Vcc1 is supplied from the power supply line PL1 to the D terminal of the FF 16. Therefore, in the FF 16, a low-level signal is continuously output from the QC) terminal unless the signal input to the CLRC) terminal operating with a negative logic is at a low level.

A signal input to the CLR(⁻) terminal of the FF 17 is at a low level when the temperature of the heater HTR is excessive, when the temperature of the case 110 is excessive, or when the low-level signal indicating the abnormality detection is output from the notification terminal 12a of the remaining capacity meter IC 12. The FF 17 outputs a low-level signal from the Q terminal when the signal input to the CLR(⁻) terminal is at a low level. The low-level signal is input to a terminal P10 of the MCU 1, the gate terminal of the switch S6, the enable terminal EN of the step-up DC-DC converter 9, and the base terminal of the bipolar transistor S 1 connected to the charging IC 2. When the low-level signal is input to the gate terminal of the switch S6, a gate-source voltage of the N-channel MOSFET constituting the switch S6 is less than a threshold voltage, and thus the switch S6 is turned off. When the low-level signal is input to the enable terminal EN of the step-up DC-DC converter 9, the enable terminal EN of the step-up DC-DC converter 9 has a positive logic, and thus the step-up operation is stopped. When the low-level signal is input to the base terminal of the bipolar transistor S1, the bipolar transistor S1 is turned on (an amplified current is output from the collector terminal). When the bipolar transistor S1 is turned on, the high-level system power supply voltage Vcc2 is input to the CEC) terminal of the charging IC 2 via the bipolar transistor S1. Since the CEC) terminal of the charging IC 2 has a negative logic, the charging of the power supply BAT is stopped. As a result, the heating of the heater HTR and the charging of the power supply BAT are stopped. Even if the MCU 1 outputs a low-level enable signal from the terminal P22 to the charge enable terminal CE(⁻) of the charging IC 2, when the bipolar transistor S1 is turned on, the amplified current is input from the collector terminal to the terminal P22 of the MCU 1 and the charge enable terminal CE(⁻) of the charging IC 2. Accordingly, it should be noted that a high-level signal is input to the charge enable terminal CE(⁻) of the charging IC 2.

The high-level system power supply voltage Vcc2 is supplied from the power supply line PL2 to the D terminal of the FF 17. Therefore, in the FF 17, a high-level signal is continuously output from the Q terminal unless a signal input to the CLR(⁻) terminal operating with a negative logic is at a low level. When a low-level signal is output from the output terminal of the operational amplifier OP3, a low-level signal is input to the CLR(⁻) terminal of the FF 17 regardless of a level of a signal output from the output terminal of the operational amplifier OP2. It should be noted that even when a high-level signal is output from the output terminal of the operational amplifier OP2, the low-level signal output from the output terminal of the operational amplifier OP3 is not affected by the high-level signal due to the diode D1. When a low-level signal is output from the output terminal of the operational amplifier OP2, even if a high-level signal is output from the output terminal of the operational amplifier OP3, the high-level signal is replaced with a low-level signal due to the diode D1.

The power supply line PL2 is further branched from the MCU mounting board 161 toward the LED mounting board 163 and the Hall IC mounting board 164. The power supply terminal VDD of the Hall IC 13, the power supply terminal VCC of the communication IC 15, and the power supply terminal VDD of the Hall IC 14 are connected to the branched power supply line PL2.

An output terminal OUT of the Hall IC 13 is connected to a terminal P3 of the MCU 1 and a terminal SW2 of the switch driver 7. When the outer panel 115 is removed, a low-level signal is output from the output terminal OUT of the Hall IC 13. The MCU 1 determines whether the outer panel 115 is attached based on a signal input to the terminal P3.

The LED mounting board 163 is provided with a series circuit (a series circuit of a resistor and a capacitor) connected to the operation switch OPS. The series circuit is connected to the power supply line PL2. A connection point of the resistor and the capacitor in the series circuit is connected to the terminal P4 of the MCU 1, the operation switch OPS, and a terminal SW1 of the switch driver 7. In a state where the operation switch OPS is not pressed, the operation switch OPS is not conductive, and signals respectively input to the terminal P4 of the MCU 1 and the terminal SW1 of the switch driver 7 are at a high level due to the system power supply voltage Vcc2. When the operation switch OPS is pressed and the operation switch OPS is brought into a conductive state, the signals respectively input to the terminal P4 of the MCU 1 and the terminal SW1 of the switch driver 7 are at a low level due to the connection to the ground 163G. The MCU 1 detects an operation of the operation switch OPS based on the signal input to the terminal P4.

When the operation switch OPS is pressed by the user, an external noise such as static electricity is likely to enter the internal unit 140, but the operation switch OPS is connected to the ground 163G when being pressed by the user. Accordingly, even in a case where the external noise enters the internal unit 140 from the operation switch OPS when the operation switch OPS is pressed by the user, the external noise may be released to the ground 163G, and thus durability of the inhalation device 100 is improved.

Further, as described above, the ground 163G is provided inside the LED mounting board 163, and thus even in a case where the external noise enters the internal unit 140 from the operation switch OPS when the operation switch OPS is pressed by the user, the external noise entering the internal unit 140 from the operation switch OPS may be prevented from entering the circuit boards other than the LED mounting board 163. Accordingly, it is possible to prevent the electronic components mounted on the circuit boards other than the LED mounting board 163 from failing due to the external noise, and the durability of the inhalation device 100 is improved.

The switch driver 7 is provided with a reset input terminal RSTB. The reset input terminal RSTB is connected to the control terminal ON of the LSW 4. When levels of signals input to the terminal SW 1 and the terminal SW2 are both at a low level (a state where the outer panel 115 is removed and the operation switch OPS is pressed), the switch driver 7 stops an output operation of the LSW 4 by outputting a low-level signal from the reset input terminal RSTB. That is, when the operation switch OPS, which is originally pressed down via the pressing unit 117 of the outer panel 115, is directly pressed down by the user in a state where the outer panel 115 is removed, the levels of the signals input to the terminal SW1 and the terminal SW2 of the switch driver 7 are both at a low level.

### <Operation in Each Operation Mode of Inhalation Device>

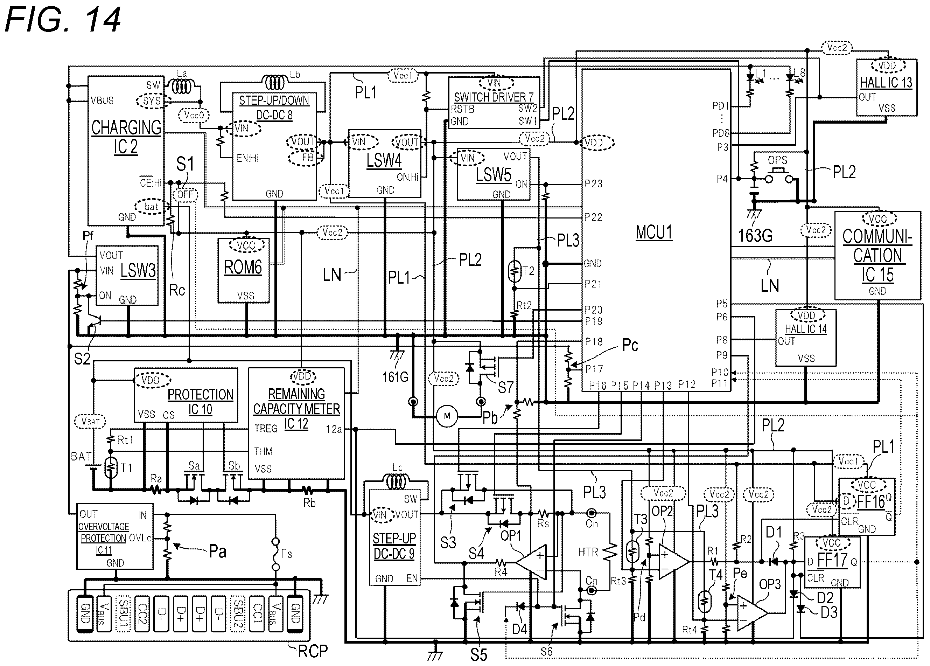

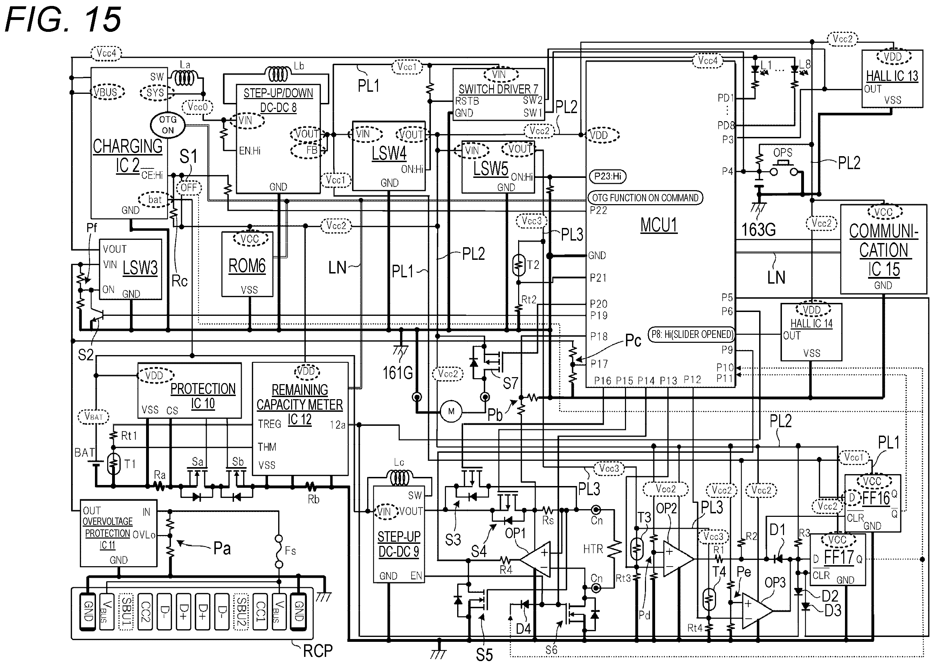

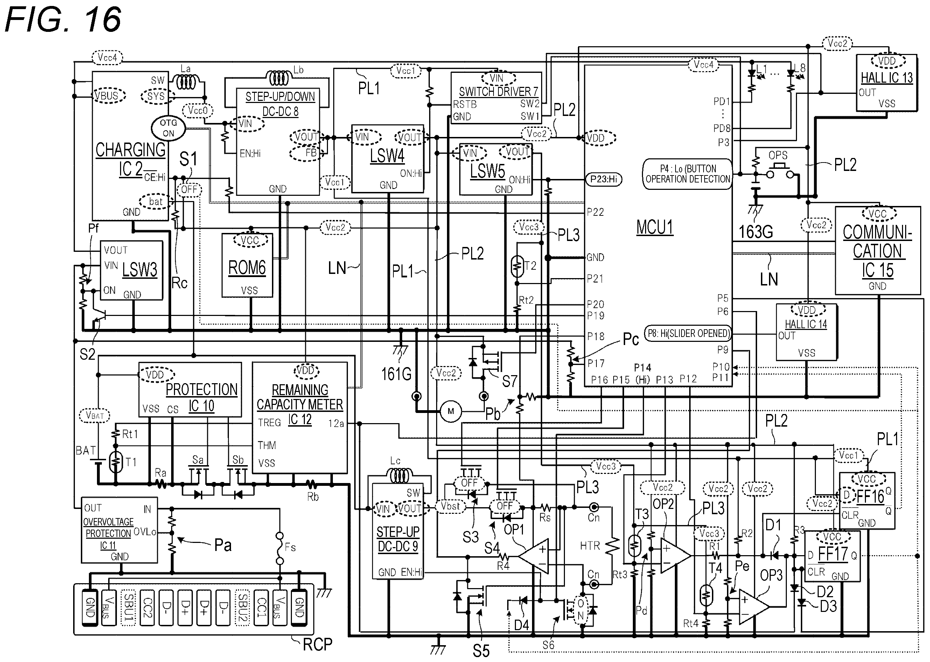

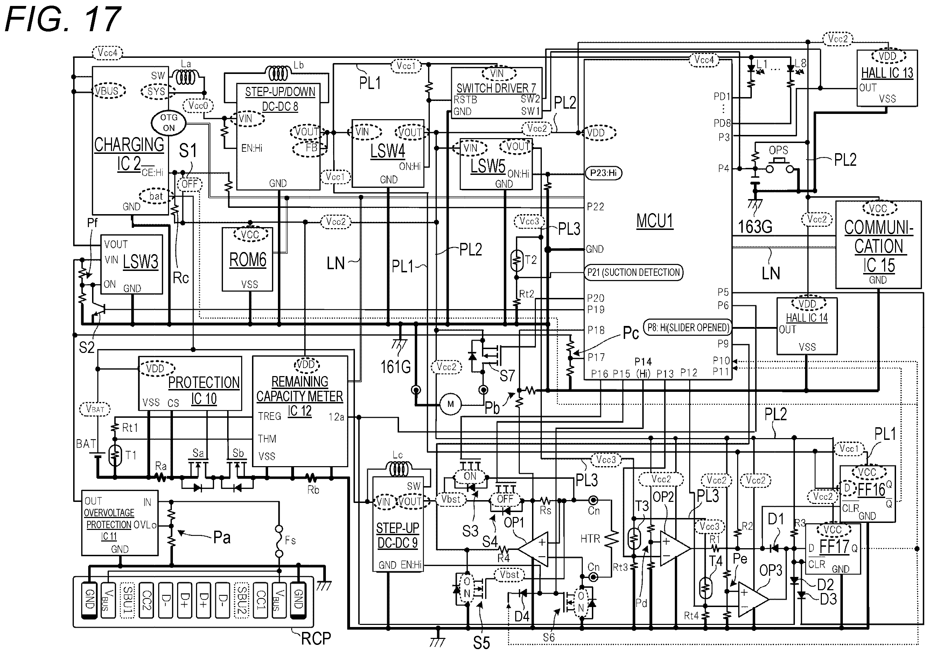

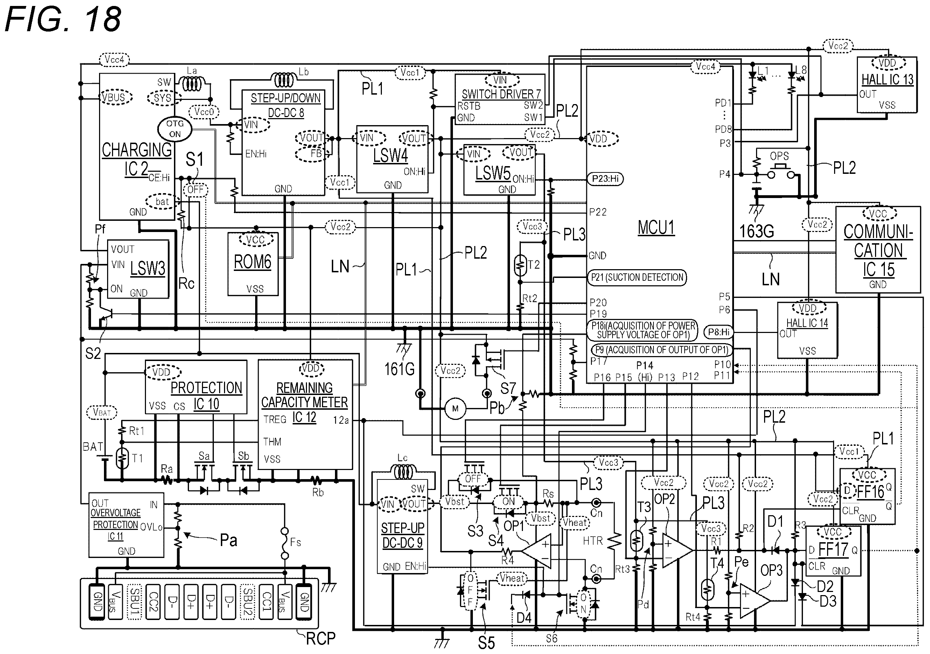

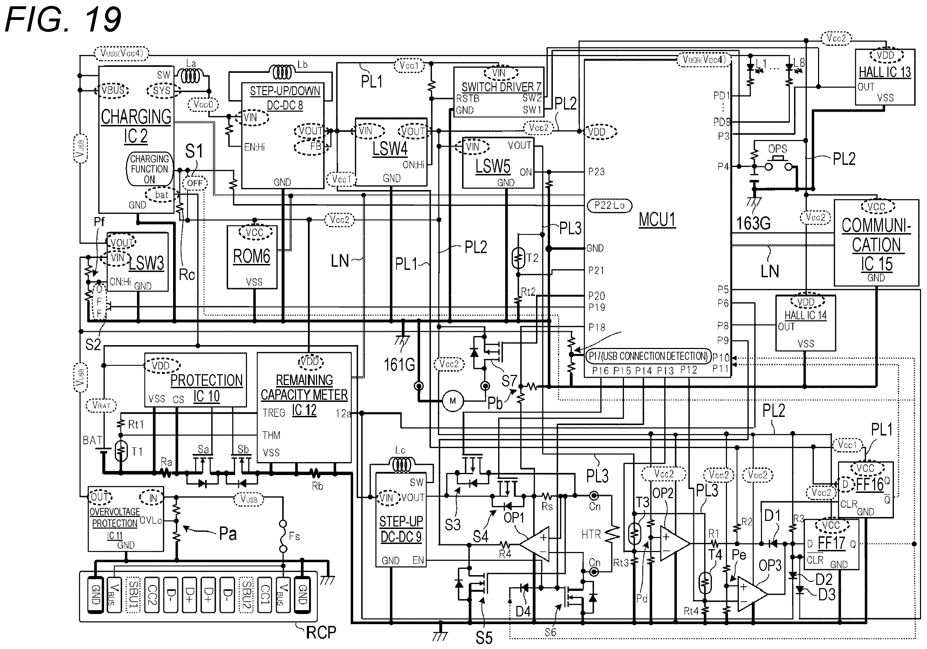

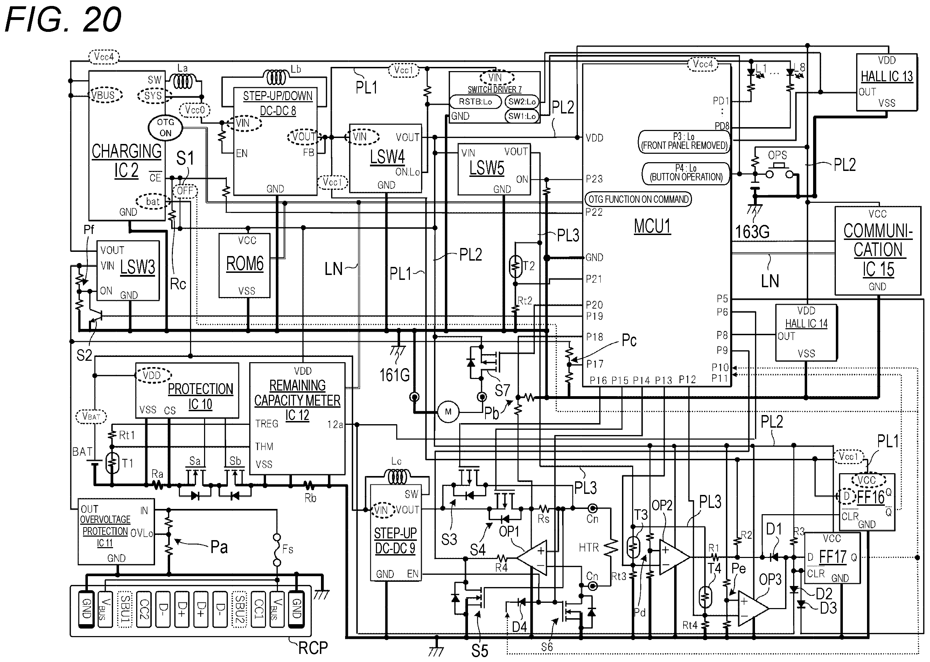

Hereinafter, operations of the electric circuit shown in Fig. 11 will be described with reference to Figs. 14 to 20. Fig. 14 is a diagram illustrating the operation of the electric circuit in the sleep mode. Fig. 15 is a diagram illustrating the operation of the electric circuit in the active mode. Fig. 16 is a diagram illustrating the operation of the electric circuit in the heating initial setting mode. Fig. 17 is a diagram illustrating the operation of the electric circuit when the heater HTR is heated in the heating mode. Fig. 18 is a diagram illustrating the operation of the electric circuit when the temperature of the heater HTR is detected in the heating mode. Fig. 19 is a diagram illustrating the operation of the electric circuit in the charge mode. Fig. 20 is a diagram illustrating the operation of the electric circuit when the MCU 1 is reset (restarted). In each of Figs. 14 to 20, among the terminals of the chipped electronic components, the terminals surrounded by broken ellipses indicate terminals to which the power supply voltage V_{BAT}, the USB voltage V_{USB}, the system power supply voltage, and the like are input or output, respectively.

In any operation mode, the power supply voltage V_{BAT} is input to the power supply terminal VDD of the protection IC 10, the input terminal VIN of the step-up DC-DC converter 9, and the charging terminal bat of the charging IC 2.

### <Sleep Mode: Fig. 14>

The MCU 1 enables the V_{BAT} power path function of the charging IC 2 and disables the OTG function and the charging function. When the USB voltage V_{USB} is not input to the input terminal VBUS of the charging IC 2, the V_{BAT} power path function of the charging IC 2 is enabled. Since a signal for enabling the OTG function is not output from the MCU 1 to the charging IC 2 via the communication line LN, the OTG function is disabled. Therefore, the charging IC 2 generates the system power supply voltage VccO based on the power supply voltage V_{BAT} input to the charging terminal bat, and outputs the system power supply voltage VccO from the output terminal SYS. The system power supply voltage VccO output from the output terminal SYS is input to the input terminal VIN and the enable terminal EN of the step-up/down DC-DC converter 8. The step-up/down DC-DC converter 8 is enabled when the high-level system power supply voltage VccO is input to the enable terminal EN which has a positive logic, generates the system power supply voltage Vcc1 based on the system power supply voltage VccO, and outputs the system power supply voltage Vcc1 from the output terminal VOUT. The system power supply voltage Vcc1 output from the output terminal VOUT of the step-up/down DC-DC converter 8 is supplied to the input terminal VIN of the LSW 4, the control terminal ON of the LSW 4, the input terminal VIN of the switch driver 7, and the power supply terminal VCC and the D terminal of the FF 16.

When the system power supply voltage Vcc1 is input to the control terminal ON, the LSW 4 outputs the system power supply voltage Vcc1 input to the input terminal VIN as the system power supply voltage Vcc2 from the output terminal VOUT. The system power supply voltage Vcc2 output from the LSW 4 is input to the power supply terminal VDD of the MCU 1, the input terminal VIN of the LSW 5, the power supply terminal VDD of the Hall IC 13, the power supply terminal VCC of the communication IC 15, and the power supply terminal VDD of the Hall IC 14. Further, the system power supply voltage Vcc2 is supplied to the power supply terminal VDD of the remaining capacity meter IC 12, the power supply terminal VCC of the ROM 6, the resistor Rc and the bipolar transistor S1 connected to the charge enable terminal CE(⁻) of the charging IC 2, the power supply terminal VCC of the FF 17, the positive power supply terminal of the operational amplifier OP3, the voltage dividing circuit Pe, the positive power supply terminal of the operational amplifier OP2, and the voltage dividing circuit Pd. The bipolar transistor S1 connected to the charging IC 2 is turned off unless a low-level signal is output from the Q terminal of the FF 17. Therefore, the system power supply voltage Vcc2 generated by the LSW 4 is also input to the charge enable terminal CE(⁻) of the charging IC 2. Since the charge enable terminal CE(⁻) of the charging IC 2 has a negative logic, the charging function of the charging IC 2 is turned off in this state.

As described above, in the sleep mode, since the LSW 5 stops outputting the system power supply voltage Vcc3, a supply of a power to the electronic components connected to the power supply line PL3 is stopped. In addition, in the sleep mode, since the OTG function of the charging IC 2 is stopped, a supply of a power to the LEDs L1 to L8 is stopped.

### <Active Mode: Fig. 15>

When the MCU 1 detects that a signal input to the terminal P8 is at a high level and the slider 119 is opened from a sleep mode state in Fig. 14, the MCU 1 inputs a high-level signal to the control terminal ON of the LSW5 from the terminal P23. Accordingly, the LSW 5 outputs the system power supply voltage Vcc2 input to the input terminal VIN as the system power supply voltage Vcc3 from the output terminal VOUT. The system power supply voltage Vcc3 output from the output terminal VOUT of the LSW 5 is supplied to the thermistor T2, the thermistor T3, and the thermistor T4.

Further, when the MCU 1 detects that the slider 119 is opened, the MCU 1 enables the OTG function of the charging IC 2 via the communication line LN. Accordingly, the charging IC 2 outputs, from the input terminal VBUS, the system power supply voltage Vcc4 obtained by stepping up the power supply voltage V_{BAT} input from the charging terminal bat. The system power supply voltage Vcc4 output from the input terminal VBUS is supplied to the LEDs L1 to L8.

### <Heating Initial Setting Mode: Fig. 16>

When a signal input to the terminal P4 is at a low level (the operation switch OPS is pressed) from a state in Fig. 15, the MCU 1 performs various settings required for heating, and then inputs a high-level enable signal from the terminal P14 to the enable terminal EN of the step-up DC-DC converter 9. Accordingly, the step-up DC-DC converter 9 outputs a drive voltage V_{bst} obtained by stepping up the power supply voltage V_{BAT} from the output terminal VOUT. The drive voltage V_{bst} is supplied to the switch S3 and the switch S4. In this state, the switch S3 and the switch S4 are turned off. In addition, the switch S6 is turned on by the high-level enable signal output from the terminal P14. Accordingly, the negative electrode-side terminal of the heater HTR is connected to the ground line, and the heater HTR may be heated by turning on the switch S3. After the high-level enable signal is output from the terminal P14 of the MCU 1, the mode shifts to the heating mode.

### <Heater Heating in Heating Mode: Fig. 17>

In a state in Fig. 16, the MCU 1 starts switching control of the switch S3 connected to the terminal P16 and switching control of the switch S4 connected to the terminal P15. The switching control may be automatically started when the above heating initial setting mode is completed, or may be started by further pressing the operation switch OPS. Specifically, the MCU 1 performs the heating control of heating the heater HTR to generate an aerosol by turning on the switch S3 and turning off the switch S4 to supply the drive voltage V_{bst} to the heater HTR as shown in Fig. 17, and performs temperature detection control of detecting the temperature of the heater HTR by turning off the switch S3 and turning on the switch S4 as shown in Fig. 18.

As shown in Fig. 17, during the heating control, the drive voltage V_{bst} is also supplied to the gate of the switch S5, and the switch S5 is turned on. In addition, during the heating control, the drive voltage V_{bst} passing through the switch S3 is also input to the positive power supply terminal of the operational amplifier OP1 via the resistor Rs. A resistance value of the resistor Rs is negligibly small as compared with an internal resistance value of the operational amplifier OP1. Therefore, during the heating control, a voltage input to the positive power supply terminal of the operational amplifier OP1 is substantially equal to the drive voltage V_{bst}.

A resistance value of the resistor R4 is larger than an on-resistance value of the switch S5. The operational amplifier OP1 operates also during the heating control, but the switch S5 is turned on during the heating control. When the switch S5 is turned on, an output voltage of the operational amplifier OP1 is divided by a voltage dividing circuit constituted by the resistor R4 and the switch S5 and is input to the terminal P9 of the MCU 1. Since the resistance value of the resistor R4 is larger than the on-resistance value of the switch S5, a voltage input to the terminal P9 of the MCU 1 is sufficiently small. Accordingly, it is possible to prevent a large voltage from being input from the operational amplifier OP1 to the MCU 1.

### <Heater Temperature Detection in Heating Mode: Fig. 18>

As shown in Fig. 18, during the temperature detection control, the drive voltage V_{bst} is input to the positive power supply terminal of the operational amplifier OP1 and is input to the voltage dividing circuit Pb. A voltage divided by the voltage dividing circuit Pb is input to the terminal P18 of the MCU 1. Based on the voltage input to the terminal P18, the MCU 1 acquires a reference voltage Vₜₑₘₚ applied to a series circuit of the resistor Rs and the heater HTR during the temperature detection control.

During the temperature detection control, the drive voltage V_{bst} (the reference voltage Vₜₑₘₚ) is supplied to the series circuit of the resistor Rs and the heater HTR. Then, a voltage Vₕₑₐₜ obtained by dividing the drive voltage V_{bst} (the reference voltage Vₜₑₘₚ) by the resistor Rs and the heater HTR is input to the non-inverting input terminal of the operational amplifier OP 1. Since the resistance value of the resistor Rs is sufficiently larger than a resistance value of the heater HTR, the voltage Vₕₑₐₜ is sufficiently lower than the drive voltage V_{bst}. During the temperature detection control, the low voltage Vₕₑₐₜ is also supplied to the gate terminal of the switch S5, so that the switch S5 is turned off. The operational amplifier OP1 amplifies a difference between a voltage input to the inverting input terminal and the voltage Vₕₑₐₜ input to the non-inverting input terminal and outputs the amplified difference.

An output signal of the operational amplifier OP1 is input to the terminal P9 of the MCU 1. The MCU 1 acquires the temperature of the heater HTR based on the signal input to the terminal P9, the reference voltage Vₜₑₘₚ acquired based on the input voltage of the terminal P18, and the known electric resistance value of the resistor Rs. The MCU 1 performs the heating control of the heater HTR based on the acquired temperature of the heater HTR. The heating control of the heater HTR includes control of discharge from the power supply BAT to the heater HTR, control such that the temperature of the heater HTR is a target temperature, and the like.

The MCU 1 may acquire the temperature of the heater HTR even during a period in which the switch S3 and the switch S4 are turned off (a period in which the heater HTR is not energized). Specifically, the MCU 1 acquires the temperature of the heater HTR based on a voltage input to the terminal P13 (an output voltage of the voltage dividing circuit constituted by the thermistor T3 and the resistor Rt3).

The MCU 1 may also acquire the temperature of the case 110 at any timing. Specifically, the MCU 1 acquires the temperature of the case 110 based on a voltage input to the terminal P12 (an output voltage of the voltage dividing circuit constituted by the thermistor T4 and the resistor Rt4).

### <Charge Mode: Fig. 19>

Fig. 19 illustrates a case where the USB connection is established in the sleep mode state. When the USB connection is established, the USB voltage V_{USB} is input to the input terminal VIN of the LSW 3 via the overvoltage protection IC 11. The USB voltage V_{USB} is also supplied to the voltage dividing circuit Pf connected to the input terminal VIN of the LSW 3. Since the bipolar transistor S2 is turned on immediately after the USB connection is established, a signal input to the control terminal ON of the LSW 3 remains at a low level. The USB voltage V_{USB} is also supplied to the voltage dividing circuit Pc connected to the terminal P17 of the MCU 1, and a voltage divided by the voltage dividing circuit Pc is input to the terminal P17. Based on the voltage input to the terminal P17, the MCU 1 detects that the USB connection is established.

When the MCU 1 detects that the USB connection is established, the MCU 1 turns off the bipolar transistor S2 connected to the terminal P19. When a low-level signal is input to a gate terminal of the bipolar transistor S2, the USB voltage V_{USB} divided by the voltage dividing circuit Pf is input to the control terminal ON of the LSW 3. Accordingly, a high-level signal is input to the control terminal ON of the LSW 3, and the LSW 3 outputs the USB voltage V_{USB} from the output terminal VOUT. The USB voltage V_{USB} output from the LSW 3 is input to the input terminal VBUS of the charging IC 2. In addition, the USB voltage V_{USB} output from the LSW 3 is directly supplied to the LEDs L1 to L8, without passing through the charging IC 2 as the system power supply voltage Vcc4.

When the MCU 1 detects that the USB connection is established, the MCU 1 further outputs a low-level enable signal from the terminal P22 to the charge enable terminal CE(⁻) of the charging IC 2. Accordingly, the charging IC 2 enables the charging function for the power supply BAT and starts the charging of the power supply BAT by using the USB voltage V_{USB} input to the input terminal VBUS. At this time, the MCU 1 does not perform the heating of the heater HTR for aerosol generation while keeping the switches S3 and S4 off. In other words, when the MCU 1 detects that the USB connection is established based on the voltage input to the terminal P17, the MCU 1 prohibits a supply of a power from the power supply BAT to the heater connector Cn. Therefore, the receptacle RCP and the overvoltage protection IC 11, which are electronic components that function only during the charging, are electronic components that function when the voltage conversion control associated with the heating control is not performed.

In a case where the USB connection is established in a state of the active mode, the MCU 1, in response to the establishment of the USB connection being detected, turns off the bipolar transistor S2 connected to the terminal P19, outputs a low-level enable signal from the terminal P22 to the charge enable terminal CE(⁻) of the charging IC 2, and turns off the OTG function of the charging IC 2 by the serial communication using the communication line LN. Accordingly, the system power supply voltage Vcc4 supplied to the LEDs L1 to L8 is switched from a voltage (a voltage based on the power supply voltage V_{BAT}) generated by the OTG function of the charging IC 2 to the USB voltage V_{USB} output from the LSW 3. The LEDs L 1 to L8 do not operate unless built-in switches are turned on by the MCU 1. Therefore, an unstable voltage in a transition period from on to off of the OTG function is prevented from being supplied to the LEDs L1 to L8.

### <Reset of MCU: Fig. 20>

When an output of the Hall IC 13 is at a low level when the outer panel 115 is removed, and the signal input to the terminal P4 of the MCU 1 is at a low level when the operation switch OPS is turned on, both the terminals SW1 and SW2 of the switch driver 7 are at a low level. Accordingly, the switch driver 7 outputs a low-level signal from the reset input terminal RSTB. The low-level signal output from the reset input terminal RSTB is input to the control terminal ON of the LSW 4. Accordingly, the LSW 4 stops the output of the system power supply voltage Vcc2 from the output terminal VOUT. Since the output of the system power supply voltage Vcc2 is stopped, the system power supply voltage Vcc2 is not input to the power supply terminal VDD of the MCU 1, and thus the MCU 1 is stopped.

The switch driver 7 returns the signal that is output from the reset input terminal RSTB to a high level when a time during which the low-level signal is output from the reset input terminal RSTB reaches a predetermined time or when the signal input to either the terminal SW1 or the terminal SW2 is at a high level. Accordingly, it is returned to a state where the control terminal ON of the LSW 4 is at a high level and the system power supply voltage Vcc2 is supplied to each unit.

### <Detailed Description of Boards>

Next, an arrangement of the ICs and the elements mounted on the MCU mounting board 161 and the receptacle mounting board 162 will be described.

### <Receptacle Mounting Board>

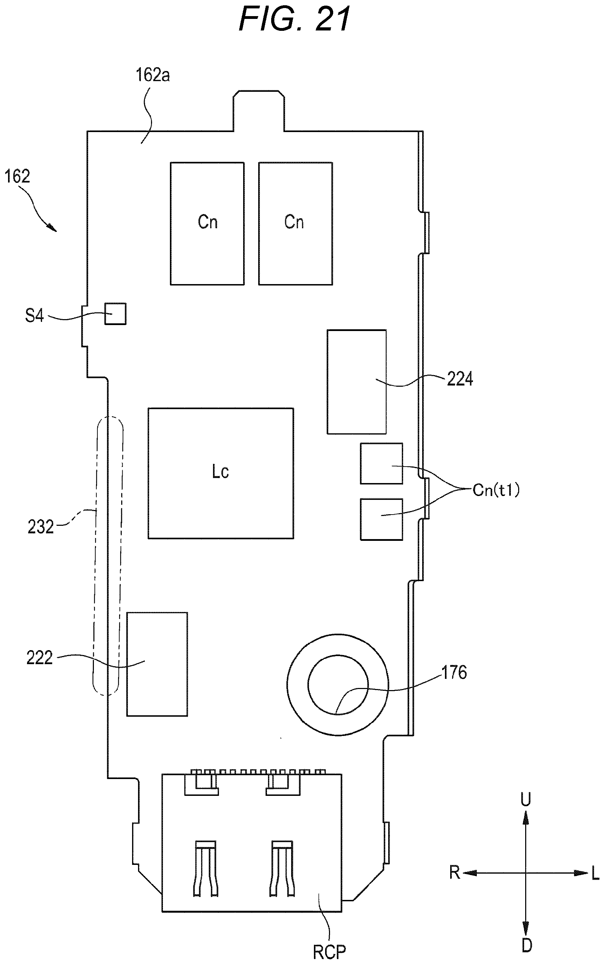

Fig. 21 is a view showing the main surface 162a of the receptacle mounting board 162. On the main surface 162a of the receptacle mounting board 162 extending in the up-down direction, the heater connectors Cn are mounted on an upper end portion, the receptacle RCP is mounted on a lower end portion, and the reactor Lc of the step-up DC-DC converter 9 is mounted between the heater connectors Cn and the receptacle RCP.

In the vicinity of the receptacle RCP, a battery connector 222 on a positive electrode side (hereinafter, referred to as a positive electrode-side battery connector 222) is mounted on an upper right side, and an opening portion 176 for fixing the spacer 173 is disposed on an upper left side. Further, a battery connector 224 on a negative electrode side (hereinafter, referred to as a negative electrode-side battery connector 224) and connectors Cn(t1) for power supply temperature detection connected to the thermistor T1 constituting the power supply temperature sensor are mounted on a left side with respect to the reactor Lc, and the switch S4 for detecting the temperature of the heater HTR is mounted on an opposite side in the left-right direction with respect to the negative electrode-side battery connector 224. The positive electrode-side power supply bus bar 236 (see Figs. 7 and 8) extending from the positive electrode terminal of the power supply BAT is connected to the positive electrode-side battery connector 222. The negative electrode-side power supply bus bar 238 (see Figs. 7 and 8) extending from the negative electrode terminal of the power supply BAT is connected to the negative electrode-side battery connector 224.

The opening portion 176 of the receptacle mounting board 162 for fixing the spacer 173 is provided at a position close to the receptacle RCP mounted on the lower end portion, in other words, closer to a lower end portion side than the upper end portion with respect to a center. Near a path through which a power supplied from the external power supply passes, a noise may be caused by the current. By providing the spacer 173 near the path, which is not affected by the noise, a board area of the receptacle mounting board 162 may be effectively utilized.

Further, the positive electrode-side battery connector 222 electrically connecting the power supply BAT and the receptacle mounting board 162 is provided at a position close to the receptacle RCP mounted on the lower end portion, in other words, below the center in the up-down direction. The positive electrode-side battery connector 222, which is a conductor, is not a little affected by the noise, but a large current passes through the positive electrode-side battery connector 222, and thus the influence of the noise is small, and therefore, the board area of the receptacle RCP can be effectively utilized by providing the positive electrode-side battery connector 222 near the path. These measures may prevent an increase in a size of the receptacle mounting board 162, so that a cost and a size of the inhalation device 100 may be reduced.

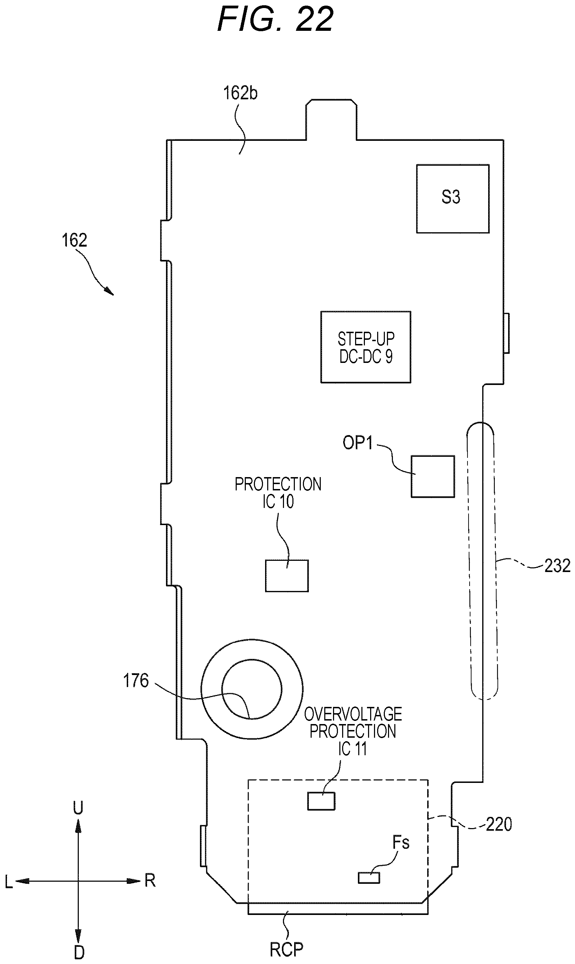

Fig. 22 is a view showing the sub surface 162b of the receptacle mounting board 162. The step-up DC-DC converter 9, the operational amplifier OP1, the protection IC 10, the overvoltage protection IC 11, the fuse Fs, and the switch S3 for the aerosol generation are mounted on the sub surface 162b of the receptacle mounting board 162 extending in the up-down direction.

The overvoltage protection IC 11 and the fuse Fs are mounted below the opening portion 176. As described above, by mounting the overvoltage protection IC 11 and the fuse Fs on the sub surface 162b opposite to the main surface 162a on which the receptacle RCP is mounted, it is possible to effectively utilize the board area and prevent the increase in the size of the receptacle mounting board 162, as compared with a case where the overvoltage protection IC 11 and the fuse Fs are mounted on the same surface as the receptacle RCP. Accordingly, the cost and the size of the inhalation device 100 may be reduced.

The overvoltage protection IC 11 is mounted on a position overlapping the receptacle RCP when viewed from a direction (the front-rear direction) orthogonal to the element arrangement surface of the receptacle mounting board 162, that is, on a receptacle projection region 220 which is a portion where the receptacle RCP is projected in the front-rear direction. Therefore, a distance between a V_{BUS} pin pair of the receptacle RCP and the overvoltage protection IC 11 may be shortened to a maximum, and an influence of a power before being protected by the overvoltage protection IC 11 on the other electrical components mounted on the receptacle mounting board 162 may be reduced. Accordingly, the durability of the inhalation device 100 may be improved, and an operation of the inhalation device 100 may be stabilized.

The step-up DC-DC converter 9, the operational amplifier OP1, the protection IC 10, and the switch S3 for the aerosol generation are mounted above the opening portion 176.

The switch S3 for the aerosol generation is mounted on an upper right end portion of the sub surface 162b of the receptacle mounting board 162. The operational amplifier OP1 is mounted near a right end portion of the sub surface 162b of the receptacle mounting board 162, substantially in a center in the up-down direction. The step-up DC-DC converter 9 is mounted between the switch S3 for the aerosol generation and the operational amplifier OP1 in the up-down direction and on a left side with respect to the switch S3 for the aerosol generation and the operational amplifier OP1 in the left-right direction. The protection IC 10 is mounted between the operational amplifier OP1 and the opening portion 176 in the up-down direction and between the step-up DC-DC converter 9 and the opening portion 176 in the left-right direction.

As described above, the positive electrode-side battery connector 222, the negative electrode-side battery connector 224, and the step-up DC-DC converter 9 are not mounted on the MCU mounting board 161, but are mounted on the receptacle mounting board 162.

The positive electrode-side battery connector 222, the negative electrode-side battery connector 224, and the step-up DC-DC converter 9 that handle a high voltage are collectively mounted on the receptacle mounting board 162. Accordingly, a noise or the like caused by the high voltage is less likely to affect the electronic components mounted on the MCU mounting board 161. Therefore, the electronic components mounted on the MCU mounting board 161 are less likely to fail, and the durability of the inhalation device 100 is improved.

The step-up DC-DC converter 9 is mounted on the sub surface 162b of the receptacle mounting board 162, and the reactor Lc is mounted on the main surface 162a of the receptacle mounting board 162.

Further, the step-up DC-DC converter 9 is mounted on the sub surface 162b of the receptacle mounting board 162, and the positive electrode-side battery connector 222 and the negative electrode-side battery connector 224 are mounted on the main surface 162a of the receptacle mounting board 162.

Since a large current supplied to the heater HTR flows through the reactor Lc, a size of the reactor Lc is particularly large in the electronic components. Therefore, by mounting the reactor Lc and the step-up DC-DC converter 9 on different surfaces of the same circuit board, it is possible to collectively mount the electronic components handling the high voltage on the receptacle mounting board 162 and to reduce the size of the receptacle mounting board 162 and achieve the miniaturization and the cost reduction of the inhalation device 100, as compared with a case where the reactor Lc and the step-up DC-DC converter 9 are mounted on the same surface.

In addition, by mounting the step-up DC-DC converter 9, and the positive electrode-side battery connector 222 and the negative electrode-side battery connector 224 on different surfaces, the positive electrode-side battery connector 222 and the negative electrode-side battery connector 224 may be physically separated from the step-up DC-DC converter 9 in which a switching noise may be generated, and thus the switching noise generated in the step-up DC-DC converter 9 is less likely to be superimposed on a current discharged from the power supply BAT or a current charged to the power supply BAT.

Further, the reactor Lc is mounted on the main surface 162a of the receptacle mounting board 162, and thus the area of the receptacle mounting board 162 may be effectively utilized as compared with a case where the reactor Lc is mounted on the sub surface 162b on which the step-up DC-DC converter 9 is mounted. At the same time, the positive electrode-side battery connector 222 and the negative electrode-side battery connector 224 may be physically separated from the step-up DC-DC converter 9 in which the switching noise may be generated. Accordingly, the switching noise generated in the step-up DC-DC converter 9 is less likely to be superimposed on the current discharged from the power supply BAT or the current charged to the power supply BAT while achieving the miniaturization and the cost reduction of the inhalation device 100.

The reactor Lc and the heater connectors Cn are mounted on the main surface 162a of the receptacle mounting board 162.

The heater connectors Cn handling the high voltage are not mounted on the MCU mounting board 161, but are mounted on the receptacle mounting board 162 on which the positive electrode-side battery connector 222, the negative electrode-side battery connector 224, and the step-up DC-DC converter 9 that handle the high voltage and a high current are mounted. Accordingly, a noise or the like caused by the high voltage or the high current is less likely to affect the electronic components mounted on the MCU mounting board 161. Therefore, the electronic components mounted on the MCU mounting board 161 are less likely to fail, and the durability of the inhalation device 100 is improved.

Further, since the large current supplied to the heater HTR flows through the reactor Lc, the size of the reactor Lc is particularly large in the electronic components. On the other hand, a lead wire is connected to the heater connector Cn, and thus it is preferable to ensure a certain amount of space in a height direction of the heater connector Cn from a viewpoint of reducing a stress applied to the heater connector Cn and a viewpoint of workability at the time of manufacturing. Therefore, by mounting the reactor Lc having a certain height and the heater connector Cn, which is preferable to ensure a certain amount of space in the height direction, on the same surface of the same board, the internal space of the case 110 of the inhalation device 100 may be effectively utilized, and thus the inhalation device 100 can be miniaturized.

The receptacle RCP is mounted on the receptacle mounting board 162.

Accordingly, the receptacle RCP handling the high voltage is mounted on the receptacle mounting board 162 on which the electronic components handling the high voltage are collectively mounted, and thus the electronic components mounted on the MCU mounting board 161 are less likely to fail, and the durability of the inhalation device 100 is improved.

The overvoltage protection IC 11 and the fuse Fs are not mounted on the MCU mounting board 161, but are mounted on the receptacle mounting board 162.

Accordingly, an undesirable current such as an overcurrent or a current including a large noise is less likely to be supplied from the receptacle RCP to the MCU mounting board 161, and thus the electronic components mounted on the MCU mounting board 161 are less likely to fail, and the durability of the inhalation device 100 is improved.

### <MCU Mounting Board>

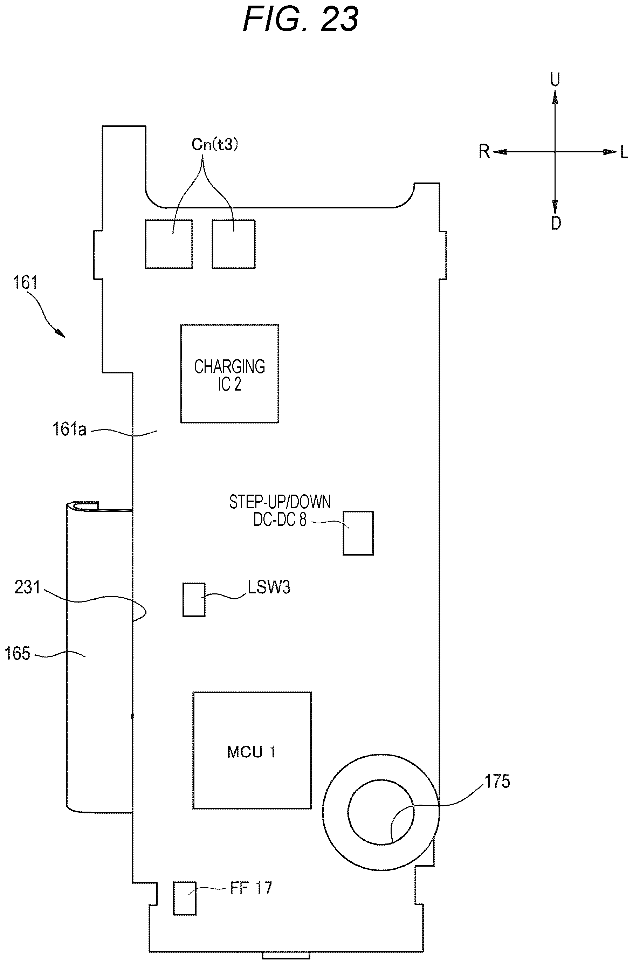

Fig. 23 is a view showing the main surface 161a of the MCU mounting board 161. On the main surface 161a of the MCU mounting board 161 extending in the up-down direction, an opening portion 175 for fixing the spacer 173 is disposed at a position corresponding to the opening portion 176 of the receptacle mounting board 162, and the MCU 1 is mounted near the opening portion 175.

The connectors Cn(t3) for heater temperature detection to which the thermistor T3 constituting the heater temperature sensor is connected via a conductive wire, the charging IC 2, the LSW 3, the step-up/down DC-DC converter 8, and the FF 17 are mounted on the main surface 161a of the MCU mounting board 161.

The connectors Cn(t3) for heater temperature detection are mounted on an upper end portion of the main surface 161a of the MCU mounting board 161.

The charging IC 2 is mounted below the connectors Cn(t3) for heater temperature detection and above a center of the main surface 161a in the up-down direction.

The LSW 3 is mounted between the charging IC 2 and the MCU 1.

The step-up/down DC-DC converter 8 is mounted on a left side with respect to the LSW 3 and between the charging IC 2 and the LSW 3 in the up-down direction.

The FF 17 is mounted on a lower right end portion below the opening portion 175 and the MCU 1.

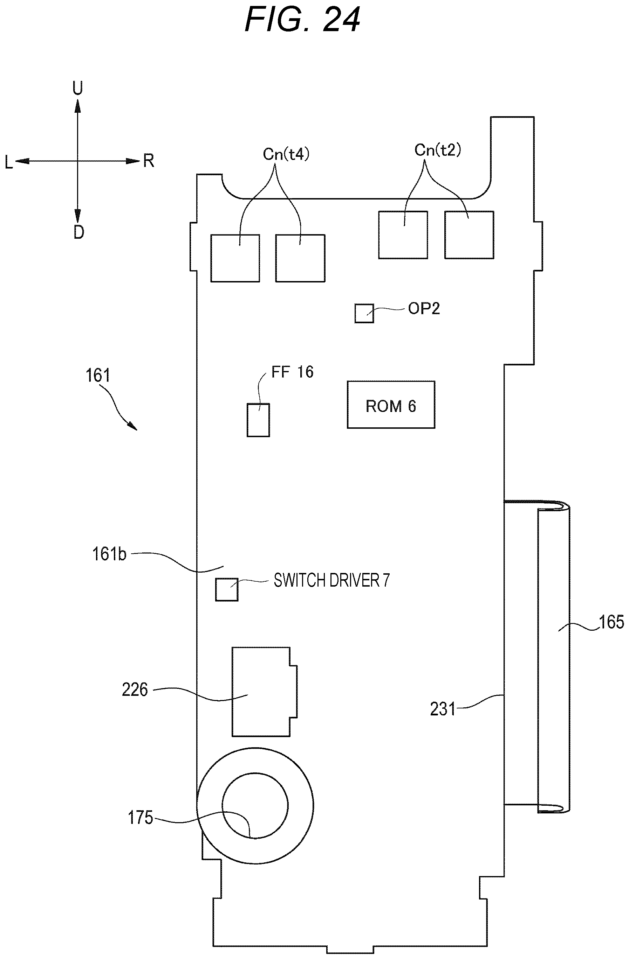

Fig. 24 is a view showing the sub surface 161b of the MCU mounting board 161. The motor connector 226 to which the vibration motor M is connected via a conductive wire, the switch driver 7, the connectors Cn(t4) for case temperature detection to which the thermistor T4 constituting the case temperature sensor is connected via a conductive wire, the connectors Cn(t2) for intake detection to which the thermistor T2 constituting the intake sensor is connected via a conductive wire, the FF 16, the ROM 6, and the operational amplifier OP2 are mounted on the sub surface 161b of the MCU mounting board 161 extending in the up-down direction.

The motor connector 226 is mounted above the opening portion 175. The motor connector 226 is mounted on a left side with respect to a center of the sub surface 161b of the MCU mounting board 161 in the left-right direction.

The switch driver 7 is mounted above the motor connector 226.

The connectors Cn(t4) for case temperature detection and the connectors Cn(t2) for intake detection are mounted on an upper end portion of the sub surface 161b of the MCU mounting board 161. In the present embodiment, the connectors Cn(t4) for case temperature detection are mounted on a left end side of the sub surface 161b of the MCU mounting board 161 in the left-right direction, and the connectors Cn(t2) for intake detection are mounted on a right end side of the sub surface 161b of the MCU mounting board 161 in the left-right direction.

The FF 16 is mounted between the connectors Cn(t4) for case temperature detection and the switch driver 7. The FF 16 is mounted on the left end side of the sub surface 161b of the MCU mounting board 161 in the left-right direction.

The ROM 6 is mounted on a right side with respect to the FF 16. The ROM 6 is mounted slightly on a right side with respect to a center of the sub surface 161b of the MCU mounting board 161 in the left-right direction.

The operational amplifier OP2 is mounted between the connectors Cn(t2) for intake detection and the ROM 6. The operational amplifier OP2 is mounted between the connectors Cn(t2) for intake detection and the connectors Cn(t4) for case temperature detection in the left-right direction of the sub surface 161b of the MCU mounting board 161, and is mounted substantially on the center of the sub surface 161b of the MCU mounting board 161 in the left-right direction.

The flexible interconnect board 165 electrically connecting the MCU mounting board 161 and the receptacle mounting board 162 connects FPC connection portions 231 and 232 of the MCU mounting board 161 and the receptacle mounting board 162 to each other. The FPC connection portion 231 is located on a right end portion of the MCU mounting board 161 and at a position extending downward from a substantially central portion in the up-down direction to the vicinity of the opening portion 175. The FPC connection portion 232 is located on a right end portion of the receptacle mounting board 162 and at a position extending downward from a substantially central portion in the up-down direction to the vicinity of the opening portion 176. Therefore, the flexible interconnect board 165 is mounted on the right end portion of the MCU mounting board 161 and the right end portion of the receptacle mounting board 162.

As described above, the MCU 1 is mounted on the MCU mounting board 161 different from the receptacle mounting board 162 on which the electronic components handling the high voltage are collectively mounted. In addition, the ROM 6, the FF 16, and the FF 17 capable of storing input information are also mounted on the MCU mounting board 161.

Accordingly, a failure is less likely to occur in the MCU 1, and the operation of the inhalation device 100 is stabilized. In addition, since the ROM 6, the FF 16, and the FF 17 are mounted on the MCU mounting board 161 different from the receptacle mounting board 162 on which the electronic components handling the high voltage are collectively mounted, the ROM 6, the FF 16, and the FF 17 are less likely to fail, and the operation of the inhalation device 100 is stabilized.

A first supply path for supplying, to the MCU mounting board 161 (the range 161A in Fig. 12), a power supplied from the receptacle RCP is mounted on the receptacle mounting board 162 (the range 162A in Fig. 13). The first supply path is a portion, included in the range 162A, of a connection line connecting the receptacle RCP and the input terminal VBUS of the charging IC 2. Therefore, the overvoltage protection IC 11 and the fuse Fs are provided in the first supply path as shown in Fig. 13.

Accordingly, an undesirable current such as an overcurrent or a current including a large noise is less likely to be supplied from the receptacle RCP to the MCU mounting board 161, and thus the electronic components mounted on the MCU mounting board 161 are less likely to fail, and the durability of the inhalation device 100 is improved.

As described above, the LEDs L 1 to L8 are configured to operate by the USB voltage V_{USB} supplied from the USB cable connected to the receptacle RCP without passing through the charging IC 2 and the voltage supplied from the power supply BAT via the charging IC 2. The internal unit 140 includes a second supply path for supplying, to the LEDs L1 to L8, a power supplied from the receptacle RCP. As shown in Fig. 19, the second supply path is a connection line connecting the receptacle RCP and the LEDs L1 to L8. The overvoltage protection IC 11 and the LSW 3 are provided in the second supply path.

The LEDs L1 to L8 are not mounted on the receptacle mounting board 162, but are mounted on the LED mounting board 163, and the LSW 3 is mounted on the MCU mounting board 161.

While the receptacle RCP is mounted on the receptacle mounting board 162, the LEDs L1 to L8 are mounted on a board different from the receptacle mounting board 162 and the LSW 3 is mounted on the MCU mounting board 161, thereby the LEDs L1 to L8 and the LSW 3 are separated from the receptacle RCP. Accordingly, a transient current immediately after the receptacle RCP is connected to the external power supply is less likely to be supplied to the LEDs L1 to L8 by the LSW 3. Accordingly, the LEDs L1 to L8 are less likely to fail, and marketability of the inhalation device 100 is improved.

Further, one end of each of the LEDs L 1 to L8 is connected to the second supply path, and the other end of each of the LEDs L1 to L8 is connected, via the built-in switch built in the MCU 1, to a ground 161G (see Fig. 12) via a ground line connected to the ground terminal GND of the MCU 1.

Therefore, the LEDs L1 to L8 do not operate unless the built-in switch of the MCU 1, which is less likely to fail, is turned on, and thus the LEDs L1 to L8 are less likely to fail, and the marketability of the inhalation device 100 is improved.

Although various embodiments have been described above with reference to the drawings, it goes without saying that the present invention is not limited to such examples. It is apparent to those skilled in the art that various modifications or corrections can be conceived within the scope described in the claims, and it is understood that the modifications or corrections naturally fall within the technical scope of the present invention.

In the present description, at least the following matters are described. In parentheses, corresponding components and the like in the above embodiment are shown, but the present invention is not limited thereto.
(1) A power supply unit for an aerosol generating device (non-combustion inhalation device 100), the power supply unit including:
   a power supply (power supply BAT);
   a power supply connector (positive electrode-side battery connector 222, negative electrode-side battery connector 224) to which the power supply is connected;
   a heater connector (heater connector Cn) to which a heater (heater HTR) configured to heat an aerosol source by consuming a power supplied from the power supply is connected;
   a controller (MCU 1) configured to control a supply of a power from the power supply to the heater;
   a first circuit board (receptacle mounting board 162) on which an electronic component is mounted;
   a second circuit board (MCU mounting board 161) on which an electronic component is mounted and which is separated from the first circuit board; and
   a step-up IC (step-up DC-DC converter 9) configured to step up a voltage supplied from the power supply and output the stepped-up voltage to the heater, in which
   the power supply connector and the step-up IC are not mounted on the second circuit board, but are mounted on the first circuit board.

According to (1), the power supply connector and the step-up IC that handle a high voltage are collectively mounted on the first circuit board, and thus the electronic component mounted on the second circuit board is less likely to fail, and durability of the power supply unit for the aerosol generating device is improved.

(2) The power supply unit for an aerosol generating device according to (1), further including:
a reactor (reactor Lc) connected to the step-up IC, in which
the first circuit board includes a first surface (sub surface 162b) and a second surface (main surface 162a) that is a back surface of the first surface,
the step-up IC is mounted on the first surface of the first circuit board, and
the reactor is mounted on the second surface of the first circuit board.

According to (2), a large current supplied to the heater flows through the reactor, and thus a size of the reactor is particularly large in the electronic components, but by mounting the reactor and the step-up IC on different surfaces of the same circuit board, it is possible to collectively mount the electronic component handling the high voltage on the first circuit board and to reduce a size of the first circuit board and achieve miniaturization and a cost reduction of the inhalation device 100 as compared with a case where the reactor and the step-up IC are mounted on the same surface.

(3) The power supply unit for an aerosol generating device according to (1), in which
the first circuit board includes a first surface (sub surface 162b) and a second surface (main surface 162a) that is a back surface of the first surface,
the step-up IC is mounted on the first surface of the first circuit board, and
the power supply connector is mounted on the second surface of the first circuit board.

According to (3), by mounting the step-up IC and the power supply connector on different surfaces, the power supply connector may be physically separated from the step-up IC in which a switching noise may be generated, and thus the switching noise generated in the step-up IC is less likely to be superimposed on a current discharged from the power supply or a current charged to the power supply.

(4) The power supply unit for an aerosol generating device according to (3), further including:
a reactor (reactor Lc) connected to the step-up IC, in which
the reactor is mounted on the second surface of the first circuit board.

According to (4), as compared with the case where the step-up IC and the reactor are mounted on the same surface, the power supply connector may be physically separated from the step-up IC in which the switching noise may be generated, while effectively utilizing an area of the first circuit board, and thus the switching noise generated in the step-up IC is less likely to be superimposed on the current discharged from the power supply and the current charged to the power supply, while achieving miniaturization and a cost reduction of the power supply unit for the aerosol generating device.

(5) The power supply unit for an aerosol generating device according to any one of (1) to (4), in which
the heater connector is not mounted on the second circuit board, but is mounted on the first circuit board.

According to (5), the heater connector handling the high voltage and a large current is not mounted on the second circuit board, but is mounted on the first circuit board on which the power supply connector and the step-up IC that handle the high voltage are mounted, and thus the electronic component mounted on the second circuit board is less likely to fail, and the durability of the power supply unit for the aerosol generating device is improved.

(6) The power supply unit for an aerosol generating device according to (5), further including:
a reactor (reactor Lc) connected to the step-up IC, in which
the first circuit board includes a first surface (sub surface 162b) and a second surface (main surface 162a) that is a back surface of the first surface, and
the reactor and the heater connector are mounted on the second surface of the first circuit board.

Since the large current supplied to the heater flows through the reactor, the size (particularly, a height) of the reactor is particularly large in the electronic components. On the other hand, a lead wire is connected to the heater connector, and thus it is preferable to ensure a certain amount of space in a height direction of the heater connector from a viewpoint of reducing a stress applied to the heater connector and a viewpoint of workability at the time of manufacturing.

According to (6), by mounting the reactor having a certain height and the heater connector, which is preferable to ensure a certain amount of space in the height direction, on the same surface of the same board, an internal space of the power supply unit for the aerosol generating device may be effectively utilized, and thus the power supply unit for the aerosol generating device may be miniaturized.

(7) The power supply unit for an aerosol generating device according to any one of (1) to (6), in which
the controller is mounted on the second circuit board.

According to (7), the controller is mounted on the second circuit board different from the first circuit board on which the electronic component handling the high voltage is collectively mounted, and thus the controller is less likely to fail, and an operation of the power supply unit for the aerosol generating device is stabilized.

(8) The power supply unit for an aerosol generating device according to any one of (1) to (7), further including:
a storage circuit (ROM6, flip-flop 16, flip-flop 17) configured to store input information, in which the storage circuit is mounted on the second circuit board.

According to (8), the storage circuit is mounted on the second circuit board different from the first circuit board on which the electronic component handling the high voltage is collectively mounted, and thus the storage circuit is less likely to fail, and the operation of the power supply unit for the aerosol generating device is stabilized.

(9) The power supply unit for an aerosol generating device according to any one of (1) to (8), further including:
a receptacle (receptacle RCP) electrically connectable to an external power supply, in which
a first supply path configured to supply, to the second circuit board, a power supplied from the receptacle is mounted on the first circuit board, and
an overvoltage protection IC (overvoltage protection IC 11) is provided in the first supply path.

According to (9), an undesirable current such as an overcurrent or a current including a large noise is less likely to be supplied from the receptacle to the second circuit board, and thus the electronic component mounted on the second circuit board is less likely to fail, and the durability of the power supply unit for the aerosol generating device is improved.

(10) The power supply unit for an aerosol generating device according to any one of (1) to (9), further including:
a receptacle (receptacle RCP) electrically connectable to an external power supply, in which
the receptacle is mounted on the first circuit board.

According to (10), the receptacle handling the high voltage is mounted on the first circuit board on which the electronic component handling the high voltage is collectively mounted, and thus the electronic component mounted on the second circuit board is less likely to fail, and the durability of the power supply unit for the aerosol generating device is improved.

(11) The power supply unit for an aerosol generating device according to (10), further including:
a charging IC (charging IC 2) configured to control charging of the power supply using a power supplied from the receptacle; and
a protection element (fuse Fs) configured to protect the charging IC from the power supplied from the receptacle, in which
the protection element is not mounted on the second circuit board, but is mounted on the first circuit board.

According to (11), the undesirable current such as the overcurrent or the current including the large noise is less likely to be supplied from the receptacle to the second circuit board by using the protection element, and thus the electronic component mounted on the second circuit board is less likely to fail, and the durability of the power supply unit for the aerosol generating device is improved.

(12) The power supply unit for an aerosol generating device according to (11), further including:
an electronic component (LED L1 to L8) configured to operate using the power supplied from the receptacle without passing through the charging IC;
a second supply path configured to supply, to the electronic component, the power supplied from the receptacle; and
a switch (load switch 3) provided in the second supply path, in which
the electronic component is not mounted on the first circuit board, and
the switch is mounted on the second circuit board.

According to (12), by mounting the electronic component on a board different from the first circuit board and mounting the switch on the second circuit board with respect to the first circuit board on which the receptacle is mounted, a transient current immediately after the receptacle is connected to the external power supply is less likely to be supplied to the electronic component even by using the switch. Accordingly, the electronic component is less likely to fail, and marketability of the power supply unit for the aerosol generating device is improved.

(13) The power supply unit for an aerosol generating device according to (12), further including:
a ground (ground 161G); and
a built-in switch built in the controller, in which
one end of the electronic component is connected to the second supply path, and
the other end of the electronic component is connected to the ground via the built-in switch.

According to (13), the electronic component does not operate unless the built-in switch of the controller, which is less likely to fail, is turned on, and thus the electronic component is less likely to fail, and the marketability of the power supply unit for the aerosol generating device is improved.

The present application is based on a Japanese patent application (Japanese Patent Application No. 2021-079907) filed on May 10, 2021, and contents thereof are incorporated herein by reference.

### REFERENCE SIGNS LIST

100: non-combustion inhalation device (power supply unit for aerosol generating device)
1: MCU (controller)
2: charging IC
3: load switch (LSW, switch)
6: ROM (storage circuit)
9: step-up DC-DC converter (step-up IC)
10: protection IC
11: overvoltage protection IC
16: flip-flop (FF, storage circuit)
17: flip-flop (FF, storage circuit)
161: MCU mounting board (second circuit board)
161G: ground
162: receptacle mounting board (first circuit board)
162a: main surface (second surface)
162b: sub surface (first surface)
222: positive electrode-side battery connector (power supply connector)
224: negative electrode-side battery connector (power supply connector)
BAT: power supply
Cn: heater connector
Fs: fuse (protection element)
HTR: heater
L1 to L8: LED (electronic component)
Lc: reactor
RCP: receptacle

Further embodiments are defined as E1 to E13, as follows:
E1. A power supply unit for an aerosol generating device, the power supply unit comprising:
   a power supply;
   a power supply connector to which the power supply is connected;
   a heater connector to which a heater configured to heat an aerosol source by consuming a power supplied from the power supply is connected;
   a controller configured to control a supply of a power from the power supply to the heater;
   a first circuit board on which an electronic component is mounted;
   a second circuit board on which an electronic component is mounted and which is separated from the first circuit board; and
   a step-up IC configured to step up a voltage supplied from the power supply and output the stepped-up voltage to the heater, wherein
   the power supply connector and the step-up IC are not mounted on the second circuit board, but are mounted on the first circuit board.
E2. The power supply unit for an aerosol generating device according to embodiment E1, further comprising:
   a reactor connected to the step-up IC, wherein
   the first circuit board includes a first surface and a second surface that is a back surface of the first surface,
   the step-up IC is mounted on the first surface of the first circuit board, and
   the reactor is mounted on the second surface of the first circuit board.
E3. The power supply unit for an aerosol generating device according to embodiment E1, wherein
   the first circuit board includes a first surface and a second surface that is a back surface of the first surface,
   the step-up IC is mounted on the first surface of the first circuit board, and
   the power supply connector is mounted on the second surface of the first circuit board.
E4. The power supply unit for an aerosol generating device according to embodiment E3, further comprising:
   a reactor connected to the step-up IC, wherein
   the reactor is mounted on the second surface of the first circuit board.
E5. The power supply unit for an aerosol generating device according to any one of embodiments E1 to E4, wherein
   the heater connector is not mounted on the second circuit board, but is mounted on the first circuit board.
E6. The power supply unit for an aerosol generating device according to claim 5, further comprising:
   a reactor connected to the step-up IC, wherein
   the first circuit board includes a first surface and a second surface that is a back surface of the first surface, and
   the reactor and the heater connector are mounted on the second surface of the first circuit board.
E7. The power supply unit for an aerosol generating device according to any one of embodiments E1 to E6, wherein
   the controller is mounted on the second circuit board.
E8. The power supply unit for an aerosol generating device according to any one of embodiments E1 to E7, further comprising:
   a storage circuit configured to store input information, wherein
   the storage circuit is mounted on the second circuit board.
E9. The power supply unit for an aerosol generating device according to any one of embodiments E1 to E8, further comprising:
   a receptacle electrically connectable to an external power supply, wherein
   a first supply path configured to supply, to the second circuit board, a power supplied from the receptacle is mounted on the first circuit board, and
   an overvoltage protection IC is provided in the first supply path.
E10. The power supply unit for an aerosol generating device according to any one of embodiments E1 to E9, further comprising:
   a receptacle electrically connectable to an external power supply, wherein
   the receptacle is mounted on the first circuit board.
E11. The power supply unit for an aerosol generating device according to embodiment E10, further comprising:
   a charging IC configured to control charging of the power supply using a power supplied from the receptacle; and
   a protection element configured to protect the charging IC from the power supplied from the receptacle, wherein
   the protection element is not mounted on the second circuit board, but is mounted on the first circuit board.
E12. The power supply unit for an aerosol generating device according to embodiment E11, further comprising:
   an electronic component configured to operate using the power supplied from the receptacle without passing through the charging IC;
   a second supply path configured to supply, to the electronic component, the power supplied from the receptacle; and
   a switch provided in the second supply path, wherein
   the electronic component is not mounted on the first circuit board, and
   the switch is mounted on the second circuit board.
E13. The power supply unit for an aerosol generating device according to embodiment E12, further comprising:
   a ground; and
   a built-in switch built in the controller, wherein
   one end of the electronic component is connected to the second supply path, and
   the other end of the electronic component is connected to the ground via the built-in switch.

## Claims

1. A non-combustion inhalation device (100), comprising:
a heating unit (70) including a rod accommodation portion (172) being capable of accommodating a part of a rod (500) and a heater (HTR) for heating the rod (500) from an outer periphery;
a chassis (150) defining an internal space of the non-combustion inhalation device (100) including a heating unit accommodation region (142) for accommodating the heating unit in an upper front portion, a board accommodating region (144) for accommodating a first board (161) and a second board (162) in a lower front portion and a power supply accommodation space (146) for accommodating the power supply (BAT) in a rear in an up-down direction;
wherein the first board (161) and the second board (162) are arranged parallel to each other in the board accommodation region.

2. The non-combustion inhalation device of claim 1, wherein each of element arrangement surfaces of the first board (161) and of the second board (162) extend in a left-right direction and the up-down direction and the first board (161) is disposed in front of the second board (162).

3. The non-combustion inhalation device of claim 1 or 2, wherein the heating unit (70) is constituted by a plurality of cylindrical members, and the cylindrical members are concentrically arranged to form a cylindrical body (15) as a whole.

4. The non-combustion inhalation device of any of claims 1 to 3, wherein a charging terminal (134) is mainly disposed on the second board (162).

5. The non-combustion inhalation device of any of claims 1 to 4, wherein the chassis includes an insulated chassis (150) having a plane-shaped dividing wall (152) extending along a vertical direction and being disposed substantially in a center of an internal space of a case (110) of the inhalation device.

6. The non-combustion inhalation device (100) according to any of claims 1 to 5, wherein
the first board (161) includes a main surface (161a) and a sub surface (161b);
the second board (162) includes a main surface (162a) and a sub surface (162b);
the second board (162) is accommodated in the board accommodation region (144) and arranged parallel to the first board (161) and the sub surface (161b) of the first board (161) faces the main surface (162a) of the second board (162).

7. The non-combustion inhalation device (100) according to any of claims 1 to 6, further comprising:
a switch (S3) being turned ON by a controller (1) for heating the heater (HTR);
wherein the MCU (1) is mounted on the main surface (161a) of the first board (161); and
the switch (S3) is mounted on the sub surface (162b) of the second board (162).

8. The non-combustion inhalation device (100) according to any of claims 1 to 7, further comprising:
a spacer (173), together with the chassis (150), configured to fix positions of the first board (161) and the second board (162) inside a case (110) of the non-combustion heating device, and to mechanically connect the first board (161) and the second board (162), together with the chassis (150).

9. The non-combustion inhalation device (100) according to any of claims 1 to 8, further comprising:
a heater connector (Cn) configured to electrically connect to the heater (HTR) and is mounted on an upper end portion of the main surface (162a) of the second board (162).

10. The non-combustion inhalation device (100) according to any of claims 1 to 9, further comprising:
a conductive wire for electrically connecting to the first board (161), and for wiring into a space (SP) sandwiched between the first board (161) and the second board (162).

11. The non-combustion inhalation device (100) according to any of claims 1 to 10, further comprising:
a thermistor (T3) being disposed near the heater (HTR); and
a connector (Cn(t3)) being electrically connected to the thermistor (T3) via a conductive wire and mounted on the first board (161).

12. The non-combustion inhalation device (100) according to claim 11,
wherein the connector (Cn(t3)) is mounted on the main surface (161a) of the first board (161).

13. The non-combustion inhalation device (100) according to any one of claim 6, 7 or 12, further comprising:
a battery connector (222,224) being mounted on the main surface (162) of the second board (162), vertically below the heater connector (Cn).

14. The non-combustion inhalation device (100) according to any of claims 1 to 13, further comprising:
a remaining capacity meter IC (12) being mounted on the second board (162), deriving a battery information of the power supply (BAT), and transmitting the derived battery information to the MCU (1).

15. The non-combustion inhalation device (100) according to any of claims 12 to 14,
wherein the receptacle (RCP) is electrically connected to the main surface (162a) of the second board (162), vertically below the heater connector (Cn).

16. The non-combustion inhalation device (100) according to any of claims 12 to 15,
wherein the receptacle (RCP) is electrically connected to the main surface (162a) of the second board (162), vertically below the battery connector (222, 224).

17. The non-combustion inhalation device (100) according to any of claims 1 to 16, further comprising:
a notification unit (L1~L8) performing a notification of a state of charge of the power supply (BAT);
an LED mounting board (163) on which the notification unit (L1~L8) is mounted and disposed outside of the board accommodating region (144).

18. The non-combustion inhalation device (100) according to claim 17, further comprising:
an operation switch (OPS) being operable by a user and disposed on the LED mounting board (163).

19. The non-combustion inhalation device (100) according to any of claims 1 to 18, further comprising:
a slider (119) being movable between a position where the opening (132) is closed and a position where the opening is opened;
a Hall IC (14) disposed near the slider (119) and including a Hall element; and
a Hall IC mounting board (164) on which the Hall IC (14) is mounted and disposed outside of the board accommodating region (144).

20. The non-combustion inhalation device (100) according to claim 19,
wherein the Hall mounting board (164) is disposed, vertically above of the power supply (BAT).

21. The non-combustion inhalation device (100) according to claim 16,
wherein the chassis (150) comprises a plate-shaped upper wall (154) extending from an upper edge portion of a dividing wall (152);
the power supply (BAT) is disposed, vertically below of the upper wall (154); and
the Hall mounting board (164) is disposed on an upper surface of the upper wall (154).

22. The non-combustion inhalation device (100) according to claim 17,
wherein the chassis (150) comprises a plate-shaped lower wall (155) extending from lower edge portion of the dividing wall (152); and
further comprising a cushion member (158) supported on an upper surface of the lower wall (144) supporting a contact surface with the power supply (BAT).

23. The non-combustion inhalation device (100) according to any of the preceding claims, wherein the first board includes a controller, MCU, mounting board (161) and the second board includes a receptable mounting board (162).
